(19) Europäisches Patentamt

European Patent Office

Office européen des brevets

(11) **EP 1 218 975 B1**

(12) **EUROPÄISCHE PATENTSCHRIFT**

(45) Veröffentlichungstag und Bekanntmachung des Hinweises auf die Patenterteilung:
**18.08.2004 Patentblatt 2004/34**

(21) Anmeldenummer: **00943973.8**

(22) Anmeldetag: **03.07.2000**

(51) Int Cl.7: **H01S 3/032**, H01S 3/0975
// H05H1:14

(86) Internationale Anmeldenummer:
**PCT/EP2000/006195**

(87) Internationale Veröffentlichungsnummer:
**WO 2001/003256 (11.01.2001 Gazette 2001/02)**

(54) **GASLASER**

GAS LASER

LASER A GAZ

(84) Benannte Vertragsstaaten:
**DE GB**

(30) Priorität: **02.07.1999 DE 19930755**

(43) Veröffentlichungstag der Anmeldung:
**03.07.2002 Patentblatt 2002/27**

(73) Patentinhaber:
- **CHRISTIANSEN, Jens**
  **D-91054 Buckenhof (DE)**
- **CHRISTIANSEN, Kai**
  **D-91054 Buckenhof (DE)**

(72) Erfinder:
- **CHRISTIANSEN, Jens**
  **D-91054 Buckenhof (DE)**
- **CHRISTIANSEN, Kai**
  **D-91054 Buckenhof (DE)**
- **JACOBY, Joachim**
  **D-91388 Igensdorf (DE)**
- **CHRISTIANSEN, Silke**
  **D-91054 Buckenhof (DE)**

(74) Vertreter: **Twelmeier, Ulrich, Dipl.Phys. et al**
**Zerrennerstrasse 23-25**
**75172 Pforzheim (DE)**

(56) Entgegenhaltungen:
**US-A- 4 430 290**

- **PEIYUAN ZHU ET AL: "A new argon-ion laser based on an electrodeless plasma" JOURNAL OF APPLIED PHYSICS, 1 SEPT. 1990, USA, Bd. 68, Nr. 5, Seiten 1981-1984, XP000159110 ISSN: 0021-8979**
- **PATENT ABSTRACTS OF JAPAN vol. 013, no. 074 (E-717), 20. Februar 1989 (1989-02-20) & JP 63 255981 A (RIKAGAKU KENKYUSHO), 24. Oktober 1988 (1988-10-24)**
- **KELLER J H: "Multipole Containment of Laser Plasma" IBM TECHNICAL DISCLOSURE BULLETIN, Bd. 22, Nr. 8A, Januar 1980 (1980-01), Seiten 3239-3240, XP002150412 New York, US**
- **KOBAYASHI S ET AL: "Power enhancement for argon II narrow tube lasers by a transverse magnetic field" APPLIED PHYSICS LETTERS, 15 MAY 1985, USA, Bd. 46, Nr. 10, Seiten 925-927, XP000760620 ISSN: 0003-6951**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

### Technisches Gebiet:

Die Erfindung geht aus von einem Gaslaser mit einem Gefäß zum Aufnehmen eines Gases oder eines Gasgemisches als laseraktives Medium, wobei das Gefäß eine Achse hat, in dessen Richtung der Gaslaser seine Laserstrahlung emittiert, mit Mitteln zum Erzeugen eines Plasmas in dem Gefäß und mit Mitteln zum Erzeugen eines magnetischen Feldes in dem Gefäß. Ein solcher Gaslaser ist aus **F.K. Kneubühl, M. W. Sigrist "Laser" Verlag B.G. Teubner Stuttgart 1988, Seiten 232 bis 271 bekannt.**

Erfindungsgemäß geht es insbesondere um Edelgaslaser, z.B. Helium-Neon-Laser, um Ionenlaser, insbesondere Argonionenlaser, und um Moleküllaser, insbesondere $CO_2$- Laser.

### Stand der Technik:

Die Anregung des aktiven Mediums in einem Gaslaser geschieht gewöhnlich durch eine elektrische Entladung. In einer elektrischen Gasentladung werden freie Elektronen und Ionen erzeugt. Diese Ladungsträger gewinnen durch die Beschleunigung im elektrischen Feld der Gasentladung kinetische Energie. Die gewonnene kinetische Energie der Elektronen kann durch inelastische Stöße auf andere Gasteilchen übertragen werden und diese in höhere Niveaus anregen. Die Bewegung der Ionen ist im allgemeinen unwichtig, da nur die freien Elektronen zur Anregung der Gasatome, Gasionen oder Moleküle beitragen. Aus den höheren Niveaus kann es dann zu einer stimulierten Emission von Strahlung kommen.

Der Helium-Neon-Laser ist ein Neutralatom-Gaslaser, in welchem eine Gleichstrom- oder Hochfrequenz - Entladung gezündet wird, um ein laseraktives Plasma zu erhalten. Der Wirkungsgrad des Lasers, definiert als Quotient aus optischer Leistung und elektrischer Eingangsleistung, beträgt typisch nur 0,1 %. Der Grund liegt unter anderem im ziemlich ineffizenten Anregungsmechanismus (Kneubühl / Sigrist, a.a.O. Seite 240).

Ein typischer Argonionenlaser enthält in einem als Röhre ausgebildeten Gefäß eine kaskadenartige Elektrodenanordnung, zwischen deren Elektroden in der Gasfüllung, welche typisch einen Gasdruck von 0,01 - 1 mbar aufweist, eine Hochstrombogenentladung gezündet wird, um ein laseraktives Plasma mit einem Ionisationsgrad in der Größenordnung von $10^{-4}$ bis $10^{-2}$ zu erhalten. Auch bei einem Argonionenlaser ist der Wirkungsgrad mit weniger als 0,1 % sehr klein. Die Strahlqualität, z.B. der Jitter des Strahls sowie seine maximale Intensität hängen vom Alter der Röhre ab. Infolge der Wechselwirkung des Plasmas mit der Röhre ist deren Lebensdauer stark eingeschränkt, sie beträgt bei 20 W Laserleistung typisch nur 2000 Stunden. Danach muß die Röhre, welche einige zehntausend Deutsche Mark kostet, ersetzt werden. Außerdem bedarf die Röhre einer intensiven Kühlung, die Kühlleistung beträgt typisch bis zu 40 kW. Es ist bekannt, bei einem Argonionenlaser ein longitudinales Magnetfeld anzulegen, also ein Magnetfeld, welches parallel zur Längsachse der Röhre des Lasers verläuft, um die Entladung auf die Achse zu konzentrieren und die schädlichen Effekte des Plasmas auf die Wand der Röhre zu verringern. (Kneubühl / Sigrist, a.a.O. Seite 246) Die Wirksamkeit dieser Maßnahme ist jedoch gering und hat nicht dazu geführt, den Wirkungsgrad des Lasers über 0, % anzuheben.

$CO_2$ - Laser werden je nach Bauart durch Gleichstromentladungen oder durch elektromagnetische Felder im Radiofrequenzbereich angeregt. Ihr Wirkungsgrad liegt je nach Bau- und Betriebsart typisch bei 10 % bis 15 %.

Der vorliegenden Erfindung liegt die **Aufgabe** zugrunde, bei Gaslasern den Wirkungsgrad und die Lebensdauer des Gefäßes, welches das laseraktive Medium umgibt, zu verlängern.

Diese Aufgabe wird gelöst durch einen Gaslaser mit den im Patentanspruch 1 angegebenen Merkmalen. Vorteilhafte Weiterbildungen der Erfindung sind Gegenstand der Unteransprüche.

### Darstellung der Erfindung:

Erfindungsgemäße Gaslaser haben ein Gefäß zum Aufnehmen eines Gases oder eines Gasgemisches als laseraktives Medium, wobei das Gefäß eine Achse hat, in dessen Richtung der Gaslaser seine Laserstrahlung emittiert. Zum Anregen des laseraktiven Mediums wird mit einer dem Gefäß zugeordneten Quelle für ein elektromagnetisches Wechselfeld ein Plasma erzeugt, in dem das elektromagnetische Wechselfeld in das laseraktive Medium in dem Gefäß eingekoppelt wird. Zum Erzeugen eines magnetischen Feldes in dem Gefäß ist eine Gruppe aus wenigstens zwei Magnetpolpaaren vorgesehen, deren Pole sich mit Abstand von der Achse des Gefäßes längs der Achse erstrecken und mit alternierender Polarität derart um die Achse herum angeordnet sind, daß das von ihnen ausgehende Magnetfeld im Bereich der Achse eine Senke hat. Es wird eine Plasmasäule erzeugt, die den wesentlichen Teil des laseraktiven Volumens darstellt, dessen geometrische Dimensionen bestimmt werden durch den Einschluß des Plasmas in einem statischen oder langsam veränderlichen magnetischen Multipolfeld. Durch die eingestrahlte bzw. eingekoppelte Energie aus dem elektromagnetischen Wechselfeld werden im Plasma elektrische Felder mit azimutalen oder achsparallelen Komponenten erzeugt, die in dem magnetischen Multipolfeld zu einer Verdichtung des Plasmas führen.

Das hat wesentliche Vorteile:

- Durch die Wechselwirkung der im Plasma vorliegenden Ladungsträger mit dem Magnetfeld **und** mit dem elektromagnetischen Wechselfeld werden die Ladungsträger, insbesondere die Elektronen, von der Wand des Gefäßes weg zu dessen Achse hingetrieben, wo das Magnetfeld eine Senke hat und vorzugsweise verschwindet. Dadurch wird die Wechselwirkung des Plasmas mit der Wand des Gefäßes stark vermindert.
- Die Verminderung der Wechselwirkung des Plasmas mit der Wand des Gefäßes verlängert die Lebensdauer des Gefäßes.
- Die Verminderung der Wechselwirkung des Plasmas mit der Wand des Gefäßes verringert die Aufheizung der Gefäßwand und verringert damit den Bedarf an Kühlleistung.
- Die Verringerung der Wechselwirkung des Plasmas mit der Wand des Gefäßes verringert die Absorption von Bestandteilen des Gases durch die Gefäßwand und hält deshalb die optimale Zusammensetzung und den optimalen Druck des Gases über längere Zeit aufrecht.
- Durch eine geringere Wechselwirkung der Elektronen des Plasmas mit der Wand des Gefäßes stehen mehr und energiereichere Elektronen für Stöße zur Anregung des Gases zur Verfügung, was eine Erhöhung des Wirkungsgrades des Lasers zur Folge hat.
- Dadurch, daß die Elektronen des Plasmas in die Senke des Magnetfeldes getrieben werden, steigt dort die Elektronedichte und die Stoßwahrscheinlichkeit für die Elektronen an, so daß die Strahlungsausbeute und mit ihr der Wirkungsgrad des Lasers steigt. Erste Versuche haben gezeigt, daß sich der Wirkungsgrad z.B. eines Argon-Ionenlasers gegenüber dem Stand der Technik um den Faktor zehn bis zwanzig steigern läßt.
- Durch die Konzentration der die Anregung verursachenden Elektronen auf den nahen Umgebungsbereich der Achse des Gefäßes wird der Bereich, welcher Laserstrahlung aussendet, schlanker und dadurch der Laserstrahl dünner und intensiver.
- Dadurch, daß die Wechselwirkung des Plasmas mit der Wand des Gefäßes verringert und die Elektronendichte im nahen Umgebungsbereich der Achse des Gefäßes erhöht wird, kommt es dort zu einem Anstieg der Elektronentemperatur (der kinetischen Energie der Elektronen), welche durch eine Erhöhung der Amplitude des elektromagnetischen Wechselfeldes noch weiter gesteigert werden kann. Eine Erhöhung der Amplitude des elektromagnetischen Wechselfeldes wird ihrerseits durch die verringerte Wechselwirkung des Plasmas mit der Wand des Gefäßes erleichtert.
- Die Erfindung ermöglicht eine höhere Elektronentemperatur, welche ihrerseits die Anregung höherer Energieniveaus und damit Laserstrahlung mit kürzerer Wellenlänge bis in den Bereich der Röntgenstrahlung hinein ermöglicht.
- Die hohe, mit relativ geringer HF-Leistung erreichbare Elektronentemperatur führt zu einer energetisch wesentlich niedrigeren Anschwingschwelle des Lasers.
- Mit der Erfindung lassen sich im Gefäß des Lasers Plasmen erzeugen, in welchen in an sich erwünschter Weise die Elektronentemperatur sehr viel höher ist als die Ionentemperatur.
- Die Verminderung der Wechselwirkung des Plasmas mit der Wand des Gefäßes erlaubt die Verwendung von Gefäßen aus Werkstoffen, welche weniger widerstandsfähig, weniger temperaturbeständig, weniger giftig und preiswerter sind als das für Argonionenlaser häufig verwendete Berylliumoxid.

Das Magnetfeld, welches in Verbindung mit dem elektromagnetischen Wechselfeld das Plasma und insbesonderer dessen Elektronen in der Senke des Magnetfeldes konzentriert, ist um so wirksamer, je größer sein quer zur Achse des Gefäßes verlaufender Gradient ist. Deshalb ist es günstig, wenn das Magnetfeld im Bereich der Achse des Gefäßes verschwindet und am Rand des Gefäßes möglichst hoch ist, wobei der Höhe des Magnetfeldes nur technische Grenzen im Erzeugen des Magnetfeldes und finanzielle Grenzen gesetzt sind. Aus Kostengründen wird man Magnetfelder mit einer Stärke von mehr als 10 Tesla nicht verwenden; ein guter Kompromiß aus der Stärke des Magnetfeldes und den Kosten zu seiner Erzeugung stellen Magnetfelder mit einer Stärke zwischen 0,1 und 2 Tesla an der Polschuhoberfläche, insbesondere zwischen 0, 1 und 1 Tesla dar.

Grundsätzlich könnten die Magnetpole in dem Gefäß des Lasers liegen, vorzugsweise liegen sie aber außerhalb des Gefäßes. Grundsätzlich könnte es sich bei den Magneten um Permanentmagneten handeln. Wegen der erreichbaren höheren Feldstärken werden jedoch Elektromagneten bevorzugt. Diese können durch Gleichstrom oder durch Wechselstrom erregt werden, insbesondere durch Wechselstrom, welcher in Europa standardmäßig mit 50 Hz und in den USA standardmäßig mit 60 Hz zur Verfügung steht, wodurch sich ein preiswerter Magnetaufbau ergibt. Wenn die Elektromagnete nicht durch Gleichstrom, sondern durch Wechselstrom erregt werden, soll die Frequenz des erregenden Wechselstroms jedoch klein gegen die Frequenz des elektromagnetischen Wechselfeldes sein, welches verwendet wird, um das Plasma zu erzeugen und das laseraktive Medium anzuregen, denn für die angestrebte fokussierende Wirkung des Magnetfeldes ist es am besten, wenn es im Vergleich zur Frequenz des elektromagnetischen Wechselfeldes zum Erzeugen des Plasmas nur langsam veränderlich oder quasistatisch ist.

Zweckmäßigerweise werden die Elektronen des Plasmas durch ihre Wechselwirkung mit dem Magnetfeld und mit dem elektromagnetischen Wechselfeld auf einen im wesentlichen geradlinigen Bereich konzentriert, in dessen Längsrichtung die Laserstrahlung emittiert wird. Deshalb wird es bevorzugt, daß die Achse, in deren nahen Umgebungsbereich die Elektronen konzentriert werden, sowohl eine Symmetrieachse der Anordnung aus den Magnetpolpaaren als auch eine Symmetrieachse des Gefäßes ist.

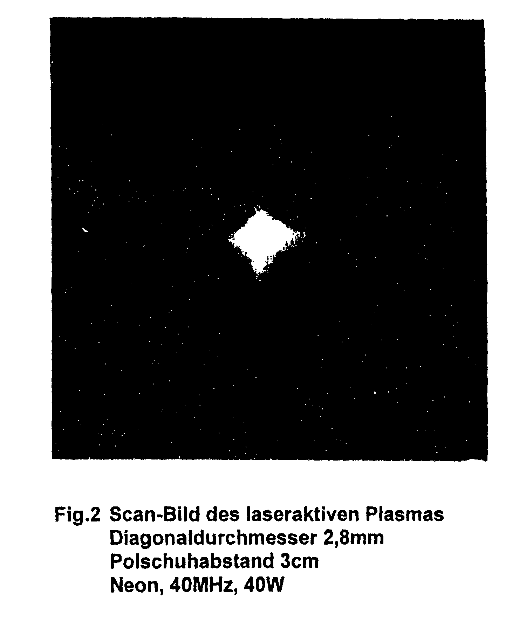

Am einfachsten ist das Gefäß eine Röhre, insbesondere eine solche mit kreisförmigem Querschnitt. Es sind aber durchaus auch Röhren mit rechteckigem oder quadratischem Querschnitt möglich, oder auch mit einem Querschnitt, welcher dem Querschnitt der leuchtenden Plasmasäule entspricht, welche durch die Wechselwirkung des Plasmas mit dem Magnetfeld und dem elektromagnetischen Wechselfeld entsteht (siehe z.B. Figur 2).

In der bevorzugten Ausführungsform der Erfindung wird ein magnetisches Vierpolfeld (Quadrupolfeld) erzeugt, welches auf der Achse des Gefäßes des Lasers eine Senke hat. In diesem Fall sind zwei Magnetpolpaare vorzugsweise symmetrisch um die Achse des Gefäßes herum angeordnet. Es ist aber auch möglich, mit einem Sechspolfeld oder mit einem Achtpolfeld zu arbeiten. Mit mehr als acht Magnetpolen, welche um die Achse herum angeordnet sind, zu arbeiten, bringt weiteren Aufwand, aber keinen relevanten Vorteil, so daß bevorzugt wird, nicht mehr als acht Pole (vier Magnetpolpaare) um die Achse herum anzuordnen.

Die Magnete können Polschuhe haben, welche sich durchgehend über die gesamte Länge des für die Anregung des Gases vorgesehenen Raumes im Gefäß des Lasers erstrecken. Bei größeren Längen kann es jedoch technisch einfacher und vorteilhafter sein, in Richtung der Achse des Gefäßes mehrere Gruppen von Magnetpolpaaren hintereinander anzuordnen, wobei die Gruppen untereinander zweckmäßigerweise gleich sind.

Das elektromagnetische Wechselfeld, dessen Aufgabe es ist, ein Plasma zu erzeugen, dessen Elektronen in dem elektromagnetischen Wechselfeld genügend Energie aufnehmen können, um in dem laserfähigen Gas die gewünschten Energieniveaus anzuregen, kann auf unterschiedliche Weise erzeugt werden. Eine Möglichkeit besteht darin, als Quelle des elektromagnetischen Wechselfeldes eine Spule zu verwenden, die das Gefäß umgibt und Bestandteil eines elektrischen Schwingkreises ist, welcher von einem Frequenzgenerator gespeist wird. Vorzugsweise umgibt die Spule das Gefäß nur auf einem Teil seiner Länge, damit das zum Leuchten angeregte Plasma nicht nur von der Umfangswand des Gefäßes des Lasers, sondern auch von dessen beiden Endwänden ferngehalten wird, um auch die Belastung der Endwände des Gefäßes kleinzuhalten und um die Verluste an Ladungsträgern des Plasmas infolge eines Auftreffens der Ladungsträger auf die Endwände des Gefäßes kleinzuhalten. Die Windungen der Spule, welche zweckmäßigerweise außerhalb des Gefäßes des Gaslasers angeordnet ist, sollen aber den Achsenbereich des von den Polen ausgehenden Multipolfeldes umschließen.

Eine andere Möglichkeit, im Gefäß ein elektromagnetisches Wechselfeld zu erzeugen, besteht darin, zwei oder mehr als zwei Elektroden in dem Gefäß vorzusehen und zum Bestandteil eines elektrischen Schwingkreises zu machen, welcher von einem Frequenzgenerator gespeist wird. In diesem Fall findet die Gasentladung und die damit einhergehende Plasmabildung zwischen den Elektroden statt. Um die in diesem Bereich entstehende Laserstrahlung auskoppeln zu können, haben die Elektroden zweckmäßigerweise im Achsenbereich des Multipolfeldes jeweils ein Loch, eine Ausnehmung, eine Perforation oder dergleichen Durchgang, durch den das Laserlicht hindurchtreten und schließlich das Gefäß durch ein Auskoppelfenster verlassen kann.
Eine Kombination dieser beiden Möglichkeiten, bei der eine Mischung von azimutaler und longitudinaler Anregung des Plasmas erfolgt (Anspruch 22), ist ebenfalls möglich und hat den Vorteil, daß die eingekoppelte Leistung erhöht wird.

Das elektromagnetische Wechselfeld kann ein Niederfrequenzfeld, ein Hochfrequenzfeld oder ein Mikrowellenfeld sein. Die Frequenz des elektromagnetischen Wechselfeldes sollte mindestens 50 Hz betragen. Bevorzugt werden Frequenzen vom kHz-Bereich bis in den GHz-Bereich hinein.

Quelle des elektromagnetischen Wechselfeldes kann auch eine frequenzangepaßte und dadurch resonanzfähige Kavität sein, die den Raumbereich des laseraktiven Plasmas umschließt und Bestandteil eines Hochfrequenzgenerators oder eines Mikrowellengenerators ist. Hohlraumresonatoren, die für diesen Zweck geeignet sind, sind von ihrem Grundaufbau her in der Mikrowellentechnik bekannt.

Die Erfindung eignet sich sowohl für kontinuierlich betriebene Laser (CW-Laser) als auch für gepulst betriebene Laser. Bei einem gepulst betriebenen Laser ist es vorteilhaft, Mittel zum permanenten Erzeugen einer Gasentladung in Kombination mit Mitteln für eine gepulste Energiezufuhr in das Plasma vorzusehen, so daß der permanenten Gasentladung, insbesondere einer Hochfrequenz- oder Mikrowellengasentladung, eine gepulste Energiezufuhr in das Plasma überlagert werden kann, welche erst die für das Aussenden von Laserlicht erforderliche Besetzungsinversion der höheren Energieniveaus erzeugt. Die permanente HF-Entladung führt zu einer hohen Vorionisierung des Gases und in weiterer Folge zu besonders homogenen Plasmen. Diese Ausführungsform der Erfindung eignet sich besonders für UV-Laser.

Für den gepulsten Betrieb des Lasers sind im Gefäß des Lasers zweckmäßigerweise Elektroden vorgesehen, welche die Länge der Plasmasäule im Gefäß beschränken und sich in einem Schaltkreis befinden, in welchem ein aufladbarer Kondensator über einen schnellen elektronischen Schalter und über die Elektroden entladen werden kann.

Als schneller elektronischer Schalter eignet sich ein Thyratron, ein Thyristor oder ein Pseudofunkenschalter. Ein geeigneter Pseudofunkenschalter ist in der EP 0 324 817 B2 offenbart. Anstelle der Elektroden kann auch eine das Gefäß des Lasers umgebende Spule vorgesehen sein, über welche der Kondensator des Schaltkreises entladen wird.

Als Füllungen für das Lasergefäß kommen vor allem Edelgase und Mischungen von Edelgasen aus der Gruppe Helium, Neon, Argon, Xenon und Krypton, darüber hinaus auch Kohlendioxid, jeweils mit den üblichen Beimischungen in Frage. Vorzugsweise enthält der Kohlendioxid-Laser noch Stickstoff und Helium oder Stickstoff und Neon und wird zum Erzeugen von Laserstrahlung mit Wellenlängen von 9,4 µm und 10,4 µm verwendet. Bei höheren Leistungen wird die Gasfüllung im $CO_2$-Laser zweckmäßigerweise umgewälzt und gekühlt, wobei das den Teil des Gefäßes, in welchem die Gasentladung stattfindet, entweder longitudinal oder transversal durchströmt. Bei einer Edelgasfüllung, insbesondere bei einem Argonionenlaser können durch die hohen Elektronentemperaturen (kinetische Elektronenenergie), welche die Erfindung ermöglicht, auch Laserübergänge in einfach oder mehrfach geladenen Ionen angeregt und dadurch besonders kurzwellige Laserstrahlen erzeugt werden. Eine weitere Frequenzerhöhung ist möglich durch Frequenzverdoppelung oder Frequenzvervielfachung der emittierten Laserstrahlung mit Mitteln der nichtlinearen Optik. Durch nichtlineare optische Kristalle lassen sich nämlich Oberwellen der in den Kristall eingestrahlten Strahlung erzeugen, was bei UV-Lasern zur Frequenzverdoppelung an sich bekannt ist. Näheres zur Technik der Frequenzvervielfachung kann nachgelesen werden bei Y. R. Shen "The Principles of non linear Optics", Wiley Verlag, N. Y., 1984.

Mit den erfindungsgemäß möglichen hohen Elektronentemperaturen und mit einer Frequenzvervielfachung kann man in einen Bereich vorstoßen, in welchem erfindungsgemäße Gaslaser als Röntgenlaser arbeiten. Solche Laser eignen sich besonders für das Bearbeiten und Erzeugen von sehr feinen Strukturen, auch für diffizile medizinische Operationen, insbesondere am Auge, und für Hautbehandlungen.

**Beschreibung der Erfindung anhand der Abbildungen:**

Figur 1    zeigt eine Anordnung der für die Erfindung wichtigsten Elemente eines Gaslasers in einer Schrägansicht für den Fall der Anregung des Plasmas durch eine Spule,

Figur 2    zeigt ein typisches Scan-Bild eines Originalphotos des Plasmaleuchtens in einem solchen Laser,

Figur 3    ist eine schematische Darstellung zur Illustrierung der in einem Vierpolfeld auftretenden Elektronenbahnen nach Anhang A1,

Figur 4a    zeigt einen Längsschnitt durch einen Gaslaser, welcher ähnlich aufgebaut ist wie der in Figur 1 dargestellte,

Figur 4b    zeigt einen Querschnitt durch den Laser aus Figur 4a,

Figur 5a    zeigt eine Möglichkeit zur Hochfrequenz-Einkopplung in das Gefäß eines Gaslasers mittels einer das Gefäß umgehenden Spule,

Figur 5b    zeigt die Möglichkeit einer Hochfrequenz-Einkopplung in das Gefäß eines Gaslasers durch im Gefäß angeordnete Elektroden,

Figur 5c    und 5d zeigen zwei Möglichkeiten zur impulsförmigen Anregung des Plasmas,

Figur 5e    zeigt eine Möglichkeit zur gemischten azimutalen und longitudinalen HF-Anregung des Plasmas, und die

Figur 6    zeigt einen $CO_2$-Laser mit Gasumwälzung.

Gleiche oder einander entsprechende Teile sind in den verschiedenen Figuren mit übereinstimmenden Bezugszahlen bezeichnet.

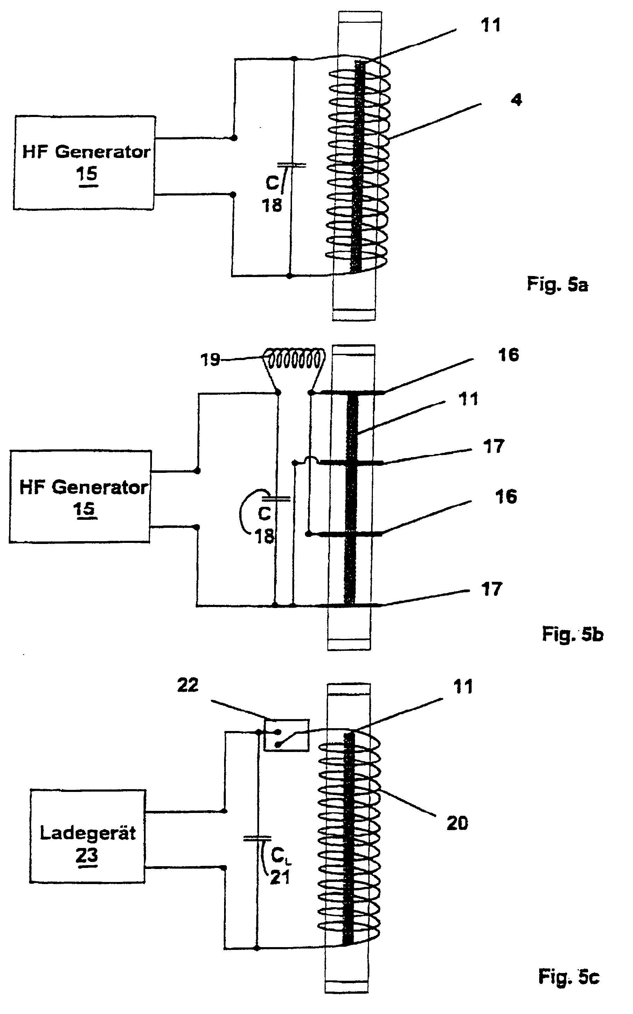

Figur I zeigt einen Gaslaser mit einem Gefäß 6 in Gestalt einer zylindrischen Röhre aus Glas oder Keramik, welche an ihren Enden durch Auskopplungsfenster 7 verschlossen ist, bei denen es sich vorzugsweise um Brewsterfenster handelt. In einigem Abstand von dem einen Fenster ist ein Hohlspiegel 8 und in einigem Abstand vom gegenüberliegenden Fenster 7 ein teildurchlässiger ebener Spiegel 9 angeordnet. Auf einem Teil ihrer Länge ist das Gefäß 6 von einer Spule 4 umgeben, welche mit einem Hochfrequenzgenerator 15 (Figuren 5a und 5b) verbunden ist. Die Spule 4 dient zum Einkoppeln eines elektromagnetischen Hochfrequenzfeldes. In demselben Bereich, in welchem das Gefäß 6 von der Spule 4 umgeben ist, ist um das Gefäß 6 herum auch eine Gruppe von vier Magnetpolen 1 und 2 angeordnet, deren Polschuhe parallel zur Längsachse (z-Achse) 14 des Gefäßes 6 verlaufen und mit alternierender Polarität, wie angeordnet, ein Vierpolfeld erzeugen, welches auf der Achse 14 verschwindet. Im einfachsten Fall können die Magnete Dauermagnete sein, vorzugsweise handelt es sich doch um Elektromagnete, welche durch Wicklungen erregt werden, die sich in geeigneter Weise auf den Schenkeln des Magnetes befinden können.

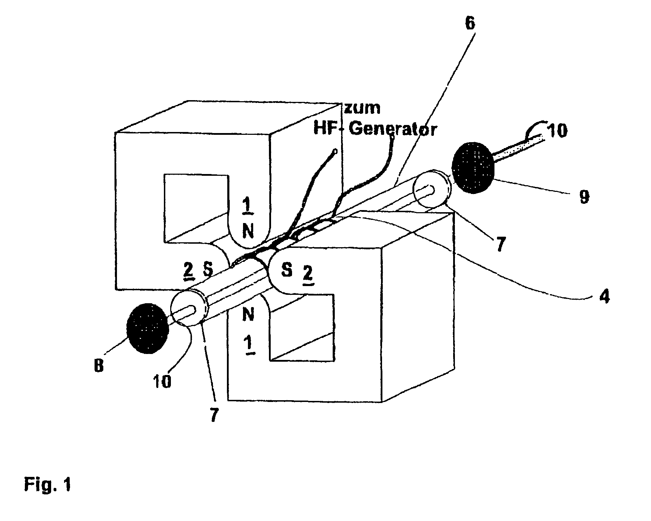

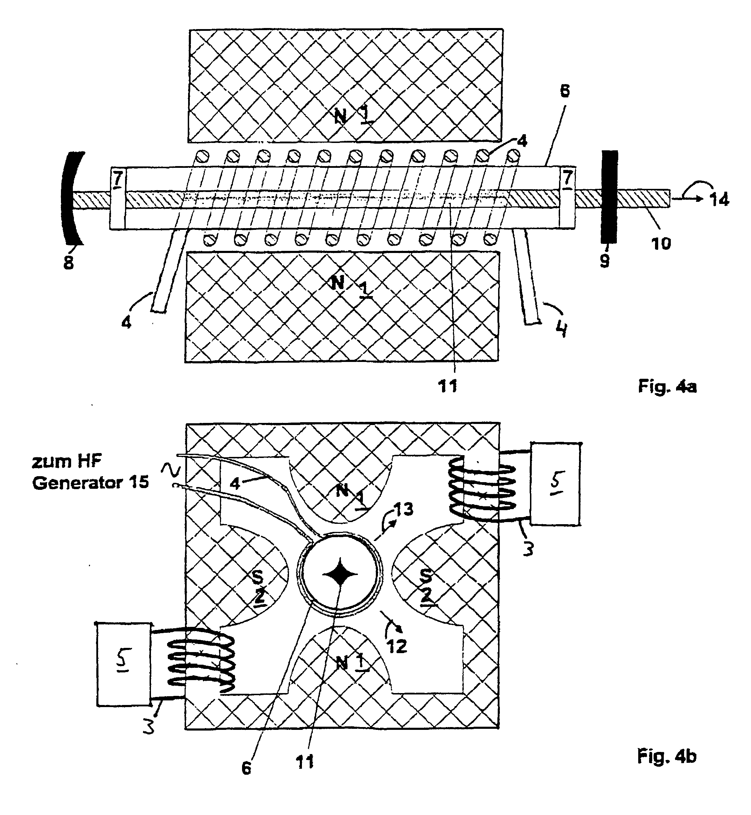

Das in den Figuren 4a und 4b dargestellte Ausführungsbeispiel unterscheidet sich von dem in Figur 1 dargestellten Ausführungsbeispiel im wesentlichen nur darin, daß die vier Magnetpole 1 und 2 nicht zwei getrennten Magneten, sondern einer einzigen, geschlossenen Magnetanordnung angehören, welche mittels einer Gleich- oder Wechselstromquelle 5 durch zwei Wicklungen 3 erregt wird.

Durch Einkoppeln eines elektromagnetischen Hochfrequenzfeldes mittels der Spule 4 in die Gasfüllung des Gefäßes 6 entsteht darin eine Hochfrequenzentladung, durch die ein Plasma entsteht, dessen Elektronen durch die Wechselwirkung mit dem Hochfrequenzfeld und mit dem Magnetfeld, welches ein statisches Magnetfeld oder ein langsam veränderliches Magnetlfeld sein kann, über die Länge der Spule 4 auf den nahen Umgebungsbereich der Achse 14 konzentriert wird. Die in diesem nahen Umgebungsbereich der Achse 14 konzentrierte Plasmasäule ist es, welche mit Hilfe der beiden Spiegel 8 und 9 zum Aussenden eines Laserstrahls 10 angeregt wird.

Figur 2 zeigt das Scan-Bild des laseraktiven Plasmas für einen Neon-Laser, welcher mit 40 W elektrischer Energie bei 40 MHz angeregt wurde, mit einem Polschuhabstand von 3 cm. Das Bild läßt deutlich die Einschnürung des laseraktiven Plasmas auf den Bereich der z-Achse 14 erkennen. Der Diagonaldurchmesser der leuchtenden Plasmasäule wurde zu 2,8 mm bestimmt. Als Diagonaldurchmesser wird der Durchmesser der Plasmasäule in Richtung der x-Achse 12 oder der y-Achse 13 (siehe Figur 4b) bezeichnet. In Figur 4a ist die Einschnürung mit Hilfe einer Rasterung dargestellt, in Figur 4b ist die für ein Vierpolfeld typische Querschnittsform der leuchtenden Plasmasäule in guter Übereinstimmung mit dem Scan-Bild aus Figur 2 dargestellt. Der Diagonaldurchmesser des Gasgefäßes betrug 2,6 cm, so daß der Durchmesser der leuchtenden Plasmasäule nur etwa 1/10 des Durchmessers des Gefäßes 6 beträgt. Die Aufnahme wurde bei einer Anregung mit 40 MHz und einer HF-Leistung von 40 W bei einer Länge der Quadrupol-Anordnung von 10 cm gemacht. Auf den theoretischen Wert des Diagonaldurchmessers der Plasmasäule 11 (Figur 4a) wird im Anhang A1 bezug genommen.

Die Figuren 5a bis 5d zeigen Möglichkeiten der HF-Einkopplung. In allen vier Figuren sind die Gefäße 6 gezeichnet, in welchen die Entladung stattfindet. Außerdem ist jeweils die Lage der leuchtenden Plasmasäule 11 angedeutet. Mit Ausnahme der für die Anregung erforderlichen Bauteile sind die übrigen Bestandteile des Gaslasers (Spiegel, die magnetische Multipolanordnung, die Auskoppelfenster) nicht dargestellt.

Gemäß Figur 5a ist das Gefäß 6, wie in Figur 1 dargestellt, von einer Spule 4 umgeben, die Bestandteil eines Schwingkreises mit dem Kondensator 18 ist. Der Schwingkreis wird durch einen HF-Generator 15 gespeist.

Gemäß Figur 5b sind in dem Gefäß 6 zwei Paare von Elektroden 16 und 17 angeordnet, welche Bestandteil eines Schwingkreises mit einer in Reihe liegenden Spule 19 und mit einem parallel liegenden Kondensator 18 sind. Der Schwingkreis wird durch einen HF-Generator 15 gespeist. Die Elektroden sind durchbrochen, um den Durchtritt von Laserstrahlung zu ermöglichen. In einem verwirklichten Ausführungsbeispiel wurden die Elektroden als Hohlzylinder ausgebildet.

In Figur 5c ist eine Anordnung für einen pulsförmigen Betrieb eines Gaslasers dargestellt. Das Gefäß 6 ist von einer Spule 20 umgeben, über welche ein Ladekondensator 21 über einen schnellen elektronischen Schalter 22 entladen werden kann. Der Schalter 22 ermöglicht einen pulsförmigen Betrieb. Zum Laden des Ladekondensators 21 ist ein Ladegerät 23 vorgesehen.

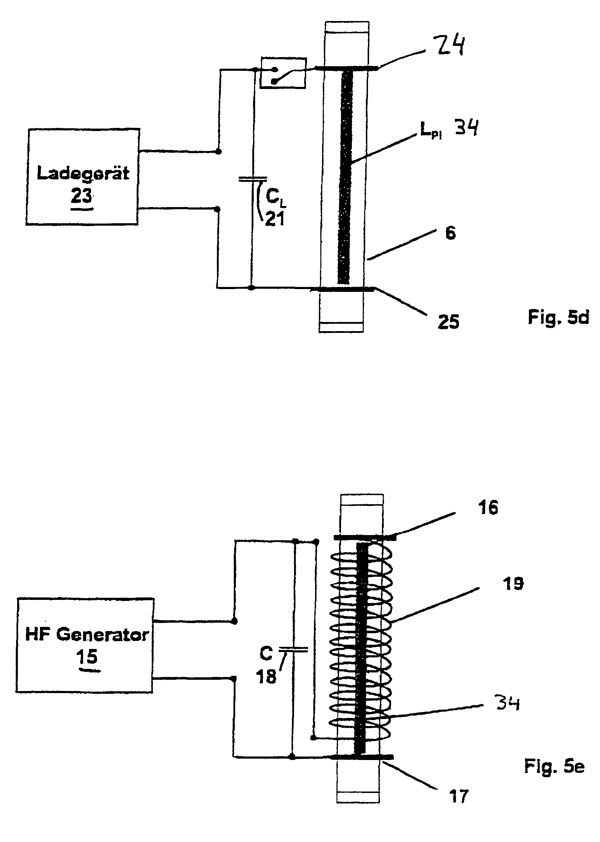

Figur 5d unterscheidet sich von Figur 5c darin, daß die Spule 20 entfallen ist. Stattdessen sind im Gefäß 6 zwei Elektroden 24 und 25 angeordnet, über welche der Ladekondensator 21 entladen werden kann.

Die in Figur 5d dargestellte Anordnung kann ergänzt werden um eine Einrichtung für eine permanente Gasentladung derart, wie sie in Figur 5a dargestellt ist. Bei einer solchen Kombination kann das Gas im Gefäß 6 durch die permanente Gasentladung vorionisiert und durch die in Figur 5d dargestellte Schaltung schließlich gezündet werden. Dies entspricht der Arbeitsweise gemäß Patentanspruch 30.

Die in Figur 5e dargestellte Anordnung unterscheidet sich von der in Figur 5b dargestellten Anordnung darin, daß anstelle von zwei Elektrodenpaaren nur ein Elektrodenpaar 16, 17 vorgesehen ist und daß die Schwingkreisspule 19 die zwischen den Elektroden 16 und 17 verlaufende Plasmastrecke 34 im Gefäß 6 umgibt. In dieser Ausführungsform der Erfindung erfolgt eine gemischte HF-Anregung des Plasmas, nämlich sowohl eine azimutale als auch eine longitudinale Anregung. Bei dieser Art der Anregung verlaufen die im Plasma fließenden HF-Ströme und das elektrische HF-Feld spiralförmig. Die an den Elektroden 16 und 17 anliegende HF-Spannung wird wie im Ausführungsbeispiel der Figur 5c durch die Eigeninduktivität des Plasma-Stromes mitbestimmt. Der Vorteil besteht in einer Erhöhung der in das Plasma eingekoppelten Leistung.

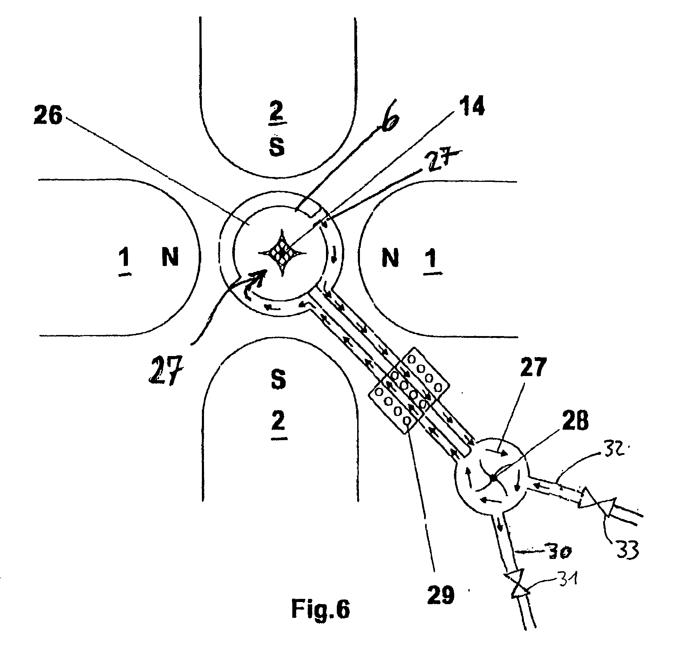

Figur 6 zeigt schematisch den Aufbau eines $CO_2$-Lasers mit Gasumwälzung. Der Bereich 26, in welchem die Gasentladung stattfindet, wird, wie die Pfeile 27 andeuten, quer durchströmt. Die Darstellung ist so gewählt, daß die Achse 14, in deren Richtung Laserstrahlung emittiert wird, senkrecht zur Zeichenebene verläuft. Zur Umwälzung des Gases ist ein Gebläse 28 vorgesehen. Im Strömungsweg des Gases liegt ein Wärmetauscher 29, welcher zur Kühlung des Gases dient. Ferner ist eine Entnahmeleitung 30 vorgesehen, welche durch ein Ventil 31 absperrbar ist und durch welche Dissoziationsprodukte des $CO_2$ abgepumpt werden können. Durch eine Zuleitung 32, in welcher ein Absperrventil 33 liegt, kann eine frische Gasmischung, welche $CO_2$ und die weiteren gegebenenfalls vorgesehenen Beimischungen wie z.B. Stickstoff und Helium enthält, in den Kreislauf eingeführt werden.

Bei einem konventionellen $CO_2$-Laser wird die Plasmasäule durch den im Gefäß 6 quer verlaufenden Gasfluß verbogen. Erfindungsgemäß wird die Plasmasäule jedoch, wie in Figur 6 dargestellt, durch die Konzentration der Elektronen auf den nahen Umgebungsbereich der Achse 14 konzentriert, so daß sich dort auch der laseraktive Teil des Plasmas befindet. Die im laseraktiven Plasma entstehenden Dissoziationsprodukte neigen dazu, im nahen Umgebungsbereich der Achse 14 zu verbleiben. Dem wirkt die quer zur Achse 14 verlaufende Umwälzung des Gases entgegen, welche deshalb vor einer longitudinalen, also längs der Achse 14 verlaufenden Umwälzung des Gases, welche ebenfalls möglich ist, vorteilhaft ist. Über die Entnahmeleitung 30 und die Zuleitung 32 können nicht nur Dissoziationsprodukte entfernt werden, sie bieten darüberhinaus die Möglichkeit, den Gasdruck im Gefäß 6 zu steuern oder zu regeln, und zwar am besten so, daß die mittlere Elektronentemperatur $T_{el}$ im Plasma durch die Bedingung $kT_{el}$ = 0,3 eV festgelegt ist, weil dieses sowohl für den Anregungsmechanismus als auch für den Wirkungsgrad des $CO_2$-Lasers optimal ist. "k" ist die Boltzmannkonstante.

Beim Betrieb von erfindungsgemäßen Gaslasern mit Quadrupolmagnetanordnung wird folgendermaßen vorgegangen (siehe Figur 1):

Die Energiezufuhr in das laserfähige Gas erfolgt durch HF-Einkopplung oder Niederfrequenz-Einkopplung (evtl. elektrodenlos), z.B. 0,1-100 kW, Frequenzen ab 50Hz bis > 100 MHz für CW-Betrieb bzw. Hochleistungskopplung im Pulsbetrieb mit HF-Pulsen bis zu 100 MW (typisch um 1 MW).

Es erfolgt ein magnetischer Einschluß des durch die Hochfrequenz gebildeten HF-Plasmas durch ein magnetisches Quadrupolfeld (Figur 1). Entlang der Laserstrahlrichtung 14 hat dieses magnetische Feld eine frei wählbare Länge. Der Polschuhabstand beträgt typischerweise einige cm, die Magnetfeldanordnung kann mit Gleichstrom oder mit konventionellem Wechselstrom betrieben werden

Nach Überschreiten der Zündamplitude des HF-Feldes (bzw. des NF-Feldes) erfolgt eine Ladungsträgervermehrung und damit eine Aufheizung der Elektronenkomponente im Plasma fast ausschließlich innerhalb eines Raumgebietes mit einem Diagonaldurchmesser $D_{1/2} \approx$ einige Millimeter. Dieser Wert ändert sich nur mit der vierten Wurzel aus der Elektronentemperatur, für Laserbetrieb im Ar-Ionenlaser beträgt diese etwa $kT_{el} \approx$ 0,3-2 eV (in Extremfällen bis ca. $10^2$ eV). Figur 2 zeigt eine Photographie dieses Plasmas (40 MHz, Einstrahlung mit 40 W). Zur Erläuterung dieses Verhaltens ist ein vertiefter Einblick in die Funktionsweise der Ladungsträgervermehrung sowie Kenntnisse über die Elektronenbahnen im Feldbereich sowie über eine auftretende Kompression des Plasmas aufgrund radialer Kräfte, die durch die von der HF ausgelösten Teilchenströme entstehen, zweckmäßig. Diese werden in den Anhängen A1 bis A3 erläutert. Bei elektrodenloser (Figur 5a) induktiver oder kapazitiver Einkopplung der HF-Energie in das Plasmagebiet, aber auch bei Anbringung von Elektroden (Figur 5b) in diesem Gebiet läßt sich der Energieverlust an den Wänden sehr niedrig halten durch Minimierung der Plasma-Wand-Berührungsflächen, aber auch durch einen Betrieb des Gaslasers an der oberen Druckgrenze (siehe unten). Auf diese Weise wird die vorhandene HF-Energie innerhalb eines engen Raumgebietes auf das Plasma übertragen und es ist möglich, in diesem eine hohe Elektronentemperatur zu erzeugen. Nach der SAHA-Gleichung ergibt sich daraus ein hoher Ionisationsgrad im Plasma, der direkt mit dem Wirkungsgrad von Gaslasern, z.B. von Edelgas-Ionenlasern, korreliert ist.

Gemäß dem Verhalten des Plasmas nach Figur 2 läßt sich die Erfindung in folgender Weise beschreiben:

Die so entstandene Plasmasäule befindet sich in einem Laserresonator (Figur 4a), wobei (insbesondere bei Hochleistungslasersystemen) ein direkter Kontakt des Plasmas mit dem Auskoppelfenster 7 sowie den Resonatorspiegeln 8, 9 sowie anderen (nicht dargestellten) in den Resonator eingebrachten optischen Komponenten gering gehalten werden sollte, z.B. durch Wahl eines Abstandes (Figur 4) zwischen den Fenstern 7 (bzw. Spiegeln 8, 9 und anderen optischen Komponenten, wenn diese fallsweise in das Gefäß 6 eingebracht sein sollten bzw. es abschließen sollten) und dem Plasma 11. Durch die hohe, erfindungsgemäß mit relativ geringer HF-Leistung erzielbare Elektronentemperatur ergibt sich gegenüber konventionellen Gaslasern eine energetisch wesentlich niedrigere Anschwingschwelle des Lasers.

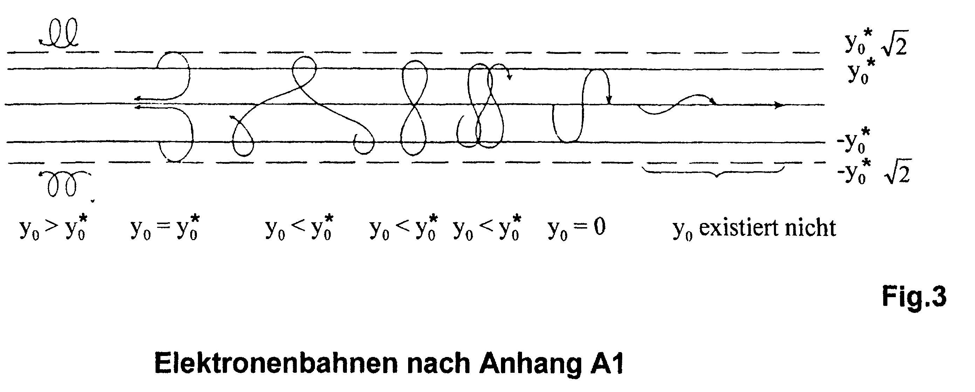

Die beobachtete Einschnürung des Plasmas 11 unter dem Einfluß der Kombination eines magnetischen Vierpolfeldes mit einer Hochfrequenzanregung des Plasmas 11 basiert auf der Wechselwirkung der durch die Hochfrequenz ausgebildeten Teilchenströme, insbesondere ihrer zeitveränderlichen Anteile, mit dem magnetischen Gradientenfeld insbesondere in der Nähe der Achse 14, welche auch Achse des Vierpols ist. Im Vordergrund steht dabei die Kraft auf ein zur Achse 14 des magnetischen Vierpolfeldes paralleles Stromelement, insbesondere in den magnetischen Sektorfeldern im Bereich um die Vierpoldiagonalebenen (Figur 3), welche einerseits durch die Achse 14 des Vierpolfeldes, im Zusammenhang mit den Figuren 4a und 5a auch als z-Achse bezeichnet, und andererseits durch die in Figur 4b als x-Achse 12 und y-Achse 13 bezeichneten Achsen aufgespannt werden, welche senkrecht zur z-Achse 14 verlaufen. Auf einen z.B. achsenparallelen Stromfaden wirkt hier eine zur z-Achse 14 gerichtete Kraft, deren Stärke proportional zu $\bar{j}_{HF} \times \bar{B}_{Quadrupol}$ ist, in der einen Halbwelle der Hochfrequenz und eine nach außen gerichtete Kraft in der entgegengesetzten Halbwelle der HF. Die nach außen gerichtete Kraft auf den gleichen Stromfaden ist stets geringer als die nach innen gerichtete, da im Vierpolfeld das B-Feld linear mit dem Abstand von der z-Achse 14 nach außen hin anwächst. In der einen Halbwelle der Hochfrequenz erfolgt eine Bewegung des Stromfadens nach außen und in der anderen Halbwelle der Hochfrequenz erfolgt eine größere Bewegung des Stromfadens nach innen. Auf diese Weise wird ein stromdurchflossenes Plasmagebiet in wenigen Perioden der HF zur z-Achse 14 hingetrieben.

Ein wichtiger Aspekt der Erfindung betrifft die Ladungsträgervermehrung. Experimentell zeigt sich, daß diese fast ausschließlich in einem engen Raumgebiet mit einem Diagonaldurchmesser $D_{1/2}$ von wenigen Millimetern stattfindet, insbesondere in einem Raumgebiet mit einem Diagonaldurchmesser $D_{1/2}$ von annähernd 3 mm. Da sich die zur Anregung benötigte Energie mit hohem Wirkungsgrad in das Plasma einkoppeln läßt, heißt dies, daß Energieverluste erfindungsgemäß nur in geringfügigem Maße auftreten, nämlich durch Teilchenbeschuß an der Gefäßwand in der Nähe der dem Gasgefäß 6 benachbarten Polschuhe 1, 2. Das Vierpolfeld wirkt auf das Plasma wie ein magnetischer Spiegel und komprimiert das Plasma längs der z-Achse 14, so daß nur ein geringer Anteil der Elektronen zur Gefäßwand gelangen kann. Daraus begründen sich der geringe Energieverlust und der geringe Gasverlust eines erfindungsgemäßen Lasers im Gegensatz zu konventionellen Gaslasern, bei welchen durch den Elektronenbeschuß auf Elektroden im Gefäß und auf die Wand des Gefäßes 6 hohe Teilchenverluste und Energieverluste auftreten.

Ein weiterer Aspekt der Erfindung betrifft den Durchmesser der Plasmasäule 11. Der Krümmungsradius ρ der Elektronen mit der thermischen Geschwindigkeit $v_{th}$ beträgt im magnetischen Feld B: $\rho = \dfrac{mv_{th}}{eB}$. Unterteilt man jetzt den Raum des Feldbereiches in einen Außenraum, in welchem die oben beschriebenen nach innen treibenden Kräfte wirken, und in einen Innenraum, in dem die Elektronen um eine Feldachse, nämlich um die z-Achse 14, "pendeln", so ist die Grenze mit einem Abstand $y_0^*$ von der z-Achse 14 zwischen diesen beiden Gebieten durch $y < y_0^*$ (Innenraum) und durch $y > y_0^*$ (Außenraum) gegeben, siehe Figur 3. Auf der Grenze $y = y_0^*$ ist der Krümmungsradius $\rho_0^*$ für ein Elektron mit $v = v_{th}$ gerade gleich dem halben Abstand von der z-Achse, auf welcher y=0 ist. Mit $B = B_Q \dfrac{y}{d}$ ist dann $B^* = B_Q \dfrac{y_0^*}{d}$,

so daß $\rho_0^* = \dfrac{mv_{th}}{eB^*} = \dfrac{mv_{th}d}{eB_Q y_0^*}$ und mit $2\rho_0^* = y_0^*$ (siehe Anhang A1)

$$2\rho_0^* = y_0^* = \sqrt{\frac{2mv_{th}d}{eB_Q}}$$

Darin bedeutet $B_Q$ das an den Polschuhen 1, 2 vorhandene magnetische Maximalfeld. Dieser Wert $y_0^*$ erweist sich experimentell auch gleich dem beobachteten halben Durchmesser der Leuchtzone 11 des Plasmas (Figur 2), vergleiche die Darstellung der Plasmasäule 11 in den Figuren 4a und 4b.

Da $v_{th}$ zu $\sqrt{kT_{el}}$ proportional ist, heißt dies, daß der Durchmesser des Elektronenplasmas mit der 4.Wurzel aus der Elektronentemperatur und der zweiten Wurzel aus dem Maximalfeld $B_Q$ (am Polschuh) skaliert. Das heißt aber, daß die mit der Erfindung einhergehende Konzentration des heißen Elektronenplasmas auf engstem Raum selbst bei extrem hohen Elektronentemperaturen nur mit der 4. Wurzel aus $T_{el}$ "aufgeweicht" wird; die durch das magnetische Vierpolfeld eingeschnürte Säule 11 des Elektronenplasmas erweitert sich nur mit der 4. Wurzel aus der Elektronentemperatur $T_{el}$. Anderseits fällt dieser Durchmesser der Säule 11 des Elektronenplasmas mit der Quadratwurzel des Magnetfeldes $B_Q$, so daß sich für Glaslaser, insbesondere für Ar-Ionen-Laser mit supraleitenden Quadrupolanordnungen zur Erzeugung starker Magnetfelder mit einer magnetischen Induktion $B_Q$ von z.B. bis zu 8 oder 10 Tesla grundsätzlich neue innovative Konzepte für Anwendungen bei hohen Leistungsdichten erwarten lassen. Im vorliegenden Fall wurde mit einer 40 W HF-Entladung von 40 MHz in einem Argonionenlaser bereits eine Elektronentemperatur in der Plasmasäule 11 von ungefähr 0,3 eV erreicht, was $T_{el} \approx$ 3000 K entspricht. Nach der SAHA-Gleichung erreicht man für $kT_{el} \approx$ 1 eV einen Ionisationsgrad von etwa 10%. Man erkennt daraus, daß der Wirkungsgrad eines erfindungsgemäßen Lasers viel größer als der eines konventionellen Ar-Lasers ist. Da keine wesentliche Barriere für die maximale Elektronentemperatur vorliegt, lassen sich hochionisierte Plasmen erzeugen, mit welchen im geeigneten Druckbereich eines im CW-Verfahren betriebenen Ar-Lasers bis zu mehreren 100W Laserleistung erreichbar sein dürften! Zum anderen eröffnet die Erfindung eine neue Möglichkeit für eine gepulste HF-Einstrahlung, bei welcher Laserpulse mit Zeitdauern von $10^{-8}$s bis $10^{-6}$s bei hoher Pulsfrequenz mit Laserleistungen bis zu 500 kW im Pulsbereich zu erwarten sind. Hiermit lassen sich Ar-Laser herstellen, die sich mit den bekannten Methoden der nichtlinearen Optik frequenzverdoppeln oder frequenzvervielfachen lassen, so daß sowohl im Leistungsbereich der Laser als auch im Anwendungsbereich von UV-Lasern und von Röntgenlasern grundsätzlich neue und vorteilhafte Laser und Anwendungen für sie geschaffen werden können.

Zur Realisierung der Erfindung ist ein geeigneter Druckbereich im Gasgefäß festzulegen. Der Fülldruck ist aus der Sicht der Plasmasäule optimal, wenn die freie Weglänge für den elastischen Stoß zwischen einem Elektron und einem Neutralatom oder einem Molekül für thermische Elektronen etwa gleich dem mittleren $2\pi$-fachen Gyrationsradius im magnetischen Feldbereich des Plasmarandes ist. Das ist für Argon für $B_Q \approx 1T$ und $\frac{mv_{th}^2}{2} \approx 1eV$ der Fall für Gasfülldrücke von etwas unterhalb 0,5 mbar.

Zur Realisierung der Erfindung ist die HF-Energie in das vom laseraktiven Volumen ausgefüllte Raumgebiet 11 im Bereich um die Vierpolachse 14 einzukoppeln. Hierzu geben die Figuren 5a, b Aufschluß. Die Frequenz $\nu_{HF}$ des HF Kreises (Figuren 5a, b) ist gegeben durch die Beziehung

$$2\pi\nu_{HF} = \frac{1}{\sqrt{L_{ges}\, C_{ges}}}$$

wobei $L_{ges}$ und $C_{ges}$ die insgesamt im Schwingkreis wirkende Induktivität und Kapazität beschreiben. Hieraus folgt mit

$$R_{blind} = \sqrt{\frac{L_{ges}}{C_{ges}}}$$

der Blindwiderstand des Schwingkreises, der für alle relevanten Plasmen größer ist als der sich in der gezündeten Plasmazone stationär aufbauende Widerstand $R_{plasma}$. Den Quotient $G = R_{blind}/R_{plasma}$ nennt man die Güte des Schwingkreises. Die Einkopplung der Energie aus dem HF-Feld kann

**longitudinal** über Elektroden 16, 17 wie in Figur 5b und Figur 5d dargestellt, oder

**azimutal** z.B. über eine innerhalb des Gasvolumens oder außerhalb desselben befindliche Spule 4 gemäß den Figuren 5a und 5c erfolgen. Auch eine Kombination von longitudinaler und azimutaler Einkopplung des HF-Feldes ist möglich, siehe Figur 5e.

Im Falle einer longitudinalen Einkopplung wirken auf die geladenen Teilchen unter dem Einfluß der Lorentzkraft nach innen treibende Kräfte, welche eine starke Fokussierung bewirken; das durch die Hochfrequenz angefachte laseraktive Plasma wird im Achsenbereich komprimiert. Der zu beobachtete Durchmesser der leuchtenden Plasmasäule beträgt nur wenige Millimeter, z.B. 6 bis 8 mm. Die im Falle der Einkopplung nach Figur 5b im Resonanzfall

$$Y_{HF} = \frac{1}{2\pi}\ \frac{1}{\sqrt{(L_{P1} + L_1)\cdot C}}$$

anliegende HF-Spannung beträgt dann

$$I_{HF} \cdot R_{imp} \cdot \frac{L_{P1}}{L_{pl}+L_1}$$

mit

$$R_{imp} = R_{BLIND}\cdot G$$

Mit dieser Schaltanordnung wird wegen des relativ hohen Wertes der Impedanz $R_{imp}$ eine besonders wirksame Energieeinkopplung erreicht.

Man kann den Schwingkreis auch mit $L_1 = 0$, das heißt, nur mit der Eigeninduktivität $L_{pl}$ des Plasmas betreiben. Dies gilt insbesondere für gepulste Laser gemäß Figur 5d.

Im Falle azimutaler Einkopplung verschwindet die Lorentzkraft auf die induzierten Plasmaströme, weil $j_{HF}$ weitgehend parallel zum Magnetfeld des Quadrupols weist. Der magnetische Feldgradient erzeugt jedoch eine ambipolare Teilchendrift in Richtung gegen die Vierpolachse, welche hier i.w. mit der Achse 14 des Gefäßes 6 zusammenfällt. Die Elektronen führen nämlich in Richtung der Achse 14 eine z. B. wendelförmige Driftbewegung aus, wobei entlang der Teilchenbahnen die Aufenthaltswahrscheinlichkeit in der Nähe der Achse 14 am größten ist. Durch Stöße löst dies eine zur Achse 14 hin gerichtete Diffusion aus. Das Ergebnis ist in Figur 2 zu sehen.

Im Bereich hoher Frequenzen wird das laserfähige Volumen durch den Skineffekt eingeschrankt was (keineswegs immer unerwünschte) Einschränkungen zur Gestaltung des Laserstrahlprofils zur Folge hat. Die Einkopplung der HF-Energie erfolgt bei sehr hohen Frequenzen zweckmäßig über geeignet dimensionierte Kavitäten. Das gilt auch für den Milcrowellenbereich. An der unteren Frequenzgrenze kann der Frequenzgenerator durch einen dann kostengünstigeren Wechselstromgenerator ersetzt werden. Die azimutale Einkopplung erfolgt bei den niedrigsten möglichen Frequenzen bis hinunter z.B. zum konventionellen Wechselstrom mit einer Frequenz von 50 Hz. Der ökonomischste Frequenzbereich liegt im Bereich um 100 kHz für welchen Frequenzgeneratoren auf Halbleiterbasis zu Verfügung stehen.

Für den CW-Betrieb sind außer Argon-Ionen-Lasern des einfach geladenen Ions auch mehrfach geladene Edelgas-Ionen-Laser z.B. $Ar^{2+}$ als auch $Ne^{1+}$ und $Ne^{2+}$ von besonderem Interesse, deren Energieniveaus wegen des hohen Wirkungsgrades erfindungsgemäßer Laser bei Elektronentemperaturen von 1 eV - 5 eV auch im CW-Betrieb mit Multi-kW-Generatoren erreicht werden können. Solche Laser reichen in den ultravioletten Frequenzbereich hinein.

Gepulste Energiezufuhr läßt sich erreichen durch HF-Pulse geeigneter Länge bei ausreichend hohen Frequenzen, wobei die HF-Pulse im Bedarfsfall einer Dauerstrich-HF überlagert werden können (siehe Anspruch 29). Dadurch kann der Laser kontinuierlich knapp unterhalb seiner Zündschwelle gehalten werden, welche durch die HF-Pulse dann jeweils überschritten wird. Insbesondere im Falle von gepulsten $Ar^{1+}$ Hochleistungslasern ist eine am Strahl mit konventionellen Methoden erreichbare Frequenzverdopplung bzw. -vervielfachung möglich.

Extreme Verhältnisse sind durch extreme Pulsamplituden z.B. in HF-Cavities erreichbar für VUV-Systeme auf der Basis hochgeladener im Gas erzeugter Ionen (z.B. $Ar^{7+}$, $Ar^{8+}$), hierfür gibt es interessante Anwendungen in der Medizin (insbesondere für Operationen im Auge), Lithographie und Röntgenmikroskopie, wo es auf extrem kurzwelliges Laserlicht ankommt, um damit feinste Strukturen erzeugen und / oder bearbeiten zu können.

Wegen der Abhängigkeit des aktiven Laservolumens von $B_Q$ sind hierzu auch supraleitende Quadrupolanordnungen von Vorteil.

### Anhang

### Theoretische Modelle zur Beschreibung von Phänomenen im Zusammenhang mit der Erfindung

Anhang A1: Teilchenbahnen

Zur Beschreibung der Teilchenbahnen der Elektronen wollen wir xyz Koordinaten (x=y=0 auf Achse, z in Achsenrichtung, {x=0}→eine der zwei Diagonalebenen, {y=0}→die andere Diagonalebene) verwenden. Es sollen jetzt die Projektionen von Elektronenbahnen auf die Ebene {x=0} für eine stoßfreie Bewegung von Teilchen mit der Geschwindigkeit $v=v_{th}$ ermittelt werden. Führen wir jetzt zusätzlich für ein betrachtetes Teilchen die Bahnkoordinaten $\rho$, $\varphi$, ein mit $\rho$=Krümmungsradius der Bahn, $\varphi$=Winkel zwischen der z-Richtung und der Senkrechten auf die Projektion der Teilchenbahn, so läßt sich (für einen Sektor) die Projektion jeder individuellen Bahn auf die Ebene {x=0} beschreiben, wenn man noch $y_0$ als y-Koordinate des Krümmungsmittelpunktes der Bahn-Projektion an der Stelle $\varphi=0$ des Teilchens einführt. Es gilt dann für das Magnetfeld am Teilchenort y:

$$B(y) - B(y_0) = (y - y_0)\left(\frac{(dB)}{(dy)}\right)$$

mit

$$\left(\frac{dB}{dy}\right)_{y=y_0} = \nabla B_0 = \frac{B_Q}{d}$$

(Eigenschaft des Vierpolfeldes in den Diagonalebenen) und $B(y_0) = \frac{B_Q}{d} y_0$ Da andererseits an jeder Stelle in diesen

Ebenen $\rho = \frac{m v_{th}}{cB}$ (m=Elektronenmasse, e=Elementarladung) ist, gilt mit

$$ds = \sqrt{dy^2 + dz^2} = \rho\, d\varphi =$$

Linienelement der Teil-chenbahn- Projektionen, $\tan\varphi = \frac{dz}{dy}$ und

$$\frac{dy}{\rho} = \frac{e}{mv_{th}}\{(B(y_0)+(y-y_0)\nabla B_0\}dy=d\varphi\frac{1}{\sqrt{1+\tan^2\varphi}}$$

Damit ergibt sich nach Integration (mit $\rho_0=\frac{mv_{th}}{eB(y_0)}$) und B(y0)=B0

$$\frac{1}{\rho_0}\int_{y_0}^{y}\left\{1+(y-y_0)\frac{\nabla B_0}{B_0}\right\}dy = \int_0^{\varphi}\cos\varphi d\varphi$$

so daß:

$$(y-y_0)^2+(y-y_0)2\frac{B_0}{\nabla B_0}-2\rho_0\frac{B_0}{\nabla B_0}\sin\varphi=0$$

und damit als Lösung:

$$y-y_0 = \frac{B_0}{\nabla B_0}\left\{\left(1+2\rho_0\frac{\nabla B_0}{B_0}\sin\varphi\right)^{1/2}-1\right\}$$

Daraus folgen die Bahndifferentiale:

$$dy = \frac{\rho_0\cos\varphi d\varphi}{\sqrt{1+2\frac{\nabla B_0}{B_0}\rho_0\sin\varphi}} \qquad\qquad (Gl.1)$$

$$dz = \frac{\rho0\sin\varphi d\varphi}{\sqrt{1+2\frac{\nabla B_0}{B_0}\rho_0\sin\varphi}} \qquad\qquad (Gl.2)$$

Mit den tabellierten elliptischen Integralen ergeben sich Bahnprojektionen auf die y, z-Ebene im Zentralbereich des Feldes. Der entartete Fall $2\rho_0\frac{\nabla B_0}{B_0}=1$ mit $\frac{\nabla B_0}{B_0}=\frac{1}{y_0^*}$ kennzeichnet den charakteristischen Radius

$$\frac{1}{2}D_{1/2}$$

der Plasmasäule im magnetischen Vierpolfeld. Er beschreibt die asymptotische Annäherung der Teil-chenbahnprojektionen an die Vierpolachse (bei $\varphi=\frac{3\pi}{2}$).

Figur 3 zeigt nach G1.1, 2 berechnete Teilchenbahnen im Vierpolzentralbereich. Dieser Bereich ist gekennzeichnet durch Bahnen, die um die Vierpolachse pendeln, genauer:

Alle Elektronenbahnprojektionen mit der mittleren Geschwindigkeit $v_{th}$ bleiben innerhalb der y-Koordinaten $y^*_0.\sqrt{2}$ mit dem Durchmesser dieser Zone von:

$$D_{1/2} = 2\sqrt{2} \cdot \sqrt{\frac{2mv_{th}d}{eB_Q}} = 2\sqrt{2}\ \frac{\sqrt[4]{8mkT_{el}}}{\sqrt[2]{\dfrac{eB_Q}{d}}} \tag{Gl.3}$$

$$D_{1/2}$$

stimmt in guter Näherung mit dem gemessenen Diagonaldurchmesser der Leuchtzone überein.

Anhang A2: Ionisation und Anregung:

Die Untersuchung wird am Beispiel des Ar-Ionenlasers durchgeführt. Es soll nur das Plasma innerhalb der Plasmasäule (Figur 2) betrachtet werden. Ionisation und Anregung findet im wesentlichen durch Elektronenstoß unter dem Einfluß der durch die Hochfrequenzfelder angefachten longitudinalen (parallel zur z-Achse) und azimutalen elektrischen Feldkomponenten statt. Es gilt dabei das (verallgemeinerte) Ohm'sche Gesetz der Plasmaphysik: $\bar{j} = \sigma \bar{E}_{HF}$. Für den Term $j_z$ (longitudinale Komponente) gilt nach der Drude-Lorentz-Theorie für diesen Anteil des Gesamtstromes $\sigma_{DR}$ $= \frac{n_i e^2}{m} \cdot \tau_{en}$ mit $\tau_{en}$ = Stoßzeit für Elektron-Atom-Stöße (mit neutralen Ar-Atomen). Die Stoßzeit beträgt $\tau_{en} = \frac{\lambda_{en}}{v_{th}}$ mit $\lambda_{en} = \frac{1}{n_0 q_{en}}$ wobei $\lambda_{en}$ die freie Weglänge für den Elektron-Neutralatomstoß und $q_{el}$ der Stoßquerschnitt für diesen Elektronenstoß ist. Damit ergibt sich in guter Näherung der Ionisations-grad und die Leitfähigkeit: $\sigma_{DR} = \frac{n_i}{n_0} \cdot \frac{e^2}{2mkT_{cl}} \cdot \frac{1}{q_{cl}}$ mit $\frac{n_i}{n_0} = \alpha$ = Ionisationsgrad unter Anwendung der Saha-Gleichung:

$$\alpha = \frac{n_1}{n_0} = 4,91 \cdot 10^{10}\ \frac{T_{el}^{3/4}}{n_0^{1/2}} \cdot e^{\frac{w_1}{2kT_a}}$$

worin $w_i$ die Ionisationsenergie von Ar ($\approx$ 16 eV), $n_0$ in $m^{-3}$ und $q_{el} \approx 10^{-19}\ m^2$ ist.

Mit steigender Elektronentemperatur steigt der Ionisationsgrad und die Wechselwirkungen Elektron-Elektron und Elektron-Ion treten in den Vordergrund. Dies führt zur Spitzer'schen Leitfähigkeitsformel, die auf der Kleinwinkelstreuung als Folge der langreichweitigen Coulombkräfte beruht. Es ist dazu in der Drude-Gleichung $\tau_{en}$ durch $\tau_{ee} + \tau_{ei}$ zu ersetzen. wobei $\tau_c = \tau_{ei} + \tau_{ee}$ die Stoßzeit für obengenannte ">90°-Stöße" mit $\tau c \sim \frac{1}{n_j}$ einzusetzen ist.

Damit gilt nach Spitzer für "vollionisierte Plasmen": $\sigma_{Sp} \approx 4 \cdot 10^{-3} \cdot T_{cl}^{3/2}$ ($T_{el}$ in Kelvin)

Die Bedingung $\sigma_{DR} = \sigma_{Sp}$ kennzeichnet den Überlappungsbereich der beiden Darstellungen von $\sigma$ als Funktion von $T_{el}$. Er beginnt bei Argon bei etwa 9000 K. Unterhalb dieser Temperatur ergibt sich eine sehr steile Temperaturabhängigkeit von $\sigma_{DR}$ aufgrund des steilen Anstiegs von a zwischen 5000 K und 9000 K. Oberhalb von 9000 K ergibt sich ein relativ langsames Anwachsen der Leitfähigkeit mit $T_{el}^{3/2}$. Oberhalb k-$T_{el} \approx$ 10eV ergeben sich hohe Ionisierungsgrade (erkennbar durch Anwendung der Saha-Gleichung auf mehrfach ionisierte Gase) und damit neue Perspektiven für VUV-Lasersysteme insbesondere bei gepulster HF-Energiezufuhr. Unterhalb etwa 5000 K ist der Ionisationsgrad und damit die Leitfähigkeit sehr gering. In diesem Fall ist die durch die in dieser Betrachtung nicht berücksichtigten "runaway"-Elektronen erfolgende Ionisierung von Bedeutung. Die Ionisation und damit auch die Anregung in die laserfähigen Niveaus ist dann proportional zu $j_{runaway}^2$ wobei $j_{runaway}$ die Stromdichte des Stroms der schnellen runaway-Elektronen darstellt. In diesem Niedertemperaturfall verhält sich das Lasersystem sehr ähnlich wie die konventionellen Ar-Ionen-Laser, jedoch ist auch hier ein höherer Wirkungsgrad wegen der besseren Ökonomie der Ladungsträgererzeugung zu verzeichnen.

Anhang A3: <u>Die Kompression des Plasmas</u>

Die Kompression des Plasmas beruht auf dem Wechselspiel zwischen der starken Fokussierung im Gradientenfeld und der bevorzugten Ladungsträgervermehrung im Gebiet 2y < $D_{½}$, wobei bei hohen Strömen ein Dichteanstieg aufgrund der magnetohydrodynamischen Kräfte ($n_i T_{el} \sim I_{HF}^2$) zu verzeichnen ist. Den Magnetfeldern des statischen Quadrupols kommt dabei die wichtige Rolle der räumlichen Stabilisierung der Plasmasäule zu. Hieraus entsteht ein Vorteil hinsichtlich der optischen Qualität der emittierten Laserstrahlung. Die Ausführungen des Anhang A1 demonstrieren das "Festhängen" der Elektronenbahnen im Gefüge der magnetischen Feldlinien des Quadrupolfeldes, wobei der Bewegungsraum der Elektronen sowie deren Vermehrung auf den Raum der Plasmasäule begrenzt sind. Die Ionen anderseits, deren B·p Werte im Zentralbereich wesentlich größer sind, werden durch elektrostatische Kräfte vom Ensemble der Elektronen eingefangen, so daß letztlich ein geringfügig (nämlich in etwa die doppelte Debye-Länge) vergrößerter Diagonaldurchmesser für das Ionenensemble entsteht. Im Grenzbereich entsteht dabei ein Potentialgefalle mit dem Potentialunterschied zwischen Elektronen und Ionen von $\Delta U = \frac{kT_{el}}{e}$.

**Bezugszahlenliste:**

1 Magnetpol
2 Magnetpol
3 Wicklungen
4 Spule
5 Stromquelle
6 Gefäß
7 Auskopplungsfenster
8 Hohlspiegel
9 Spiegel
10 Laserstrahl
11 Plasmasäule
12 x-Achse
13 y-Achse
14 z-Achse
15 Hochfrequenzgenerator
16 Elektroden
17 Elektroden
18 Kondensator
19 Spule
20 Spule
21 Ladekondensator
22 Schalter
23 Ladegerät
24 Elektroden
25 Elektroden
26 Bereich
27 Pfeile
28 Gebläse
29 Wärmetauscher
30 Entnahmeleitung
31 Absperrventil
32 Zuleitung
33 Absperrventil
34 Plasmastrecke

**EP 1 218 975 B1**

**Patentansprüche**

1. Gaslaser mit einem Gefäß (6) zum Aufnehmen eines Gases oder eines Gasgemisches als laseraktives Medium, wobei das Gefäß (6) eine Achse (14) hat, in dessen Richtung der Gaslaser seine Laserstrahlung emittiert, mit Mitteln zum Erzeugen eines Plasmas in dem Gefäß (6) und mit Mitteln zum Erzeugen eines magnetischen Feldes in dem Gefäß (6), **dadurch gekennzeichnet, daß** eine Gruppe aus zwei Magnetpolpaaren vorgesehen ist, deren Pole (1, 2) sich mit Abstand von der Achse (14) längs der Achse (14) erstrecken und mit alternierender Polarität derart um die Achse (14) herum angeordnet sind, so daß sich ein Quadrupolfeld ergibt, welches im Bereich der Achse (14) eine Senke hat,
und daß die Mittel zum Erzeugen des Plasmas eine Quelle für ein elektromagnetisches Wechselfeld beinhalten, welche dem Gefäß (6) zugeordnet ist.

2. Gaslaser nach Anspruch 1, **dadurch gekennzeichnet, daß** das Magnetfeld im Bereich der Achse (14) verschwindet.

3. Gaslaser nach Anspruch 1 oder 2, **dadurch gekennzeichnet, daß** die Achse (14) eine Symmetrieachse der Anordnung aus den Magnetpolpaaren ist.

4. Gaslaser nach einem der vorangehenden Ansprüche, **dadurch gekennzeichnet, daß** die Achse (14) eine Symmetrieachse des Gefäßes (6) ist.

5. Gaslaser nach einem der vorangehenden Ansprüche, **dadurch gekennzeichnet, daß** das Gefäß (6) eine Röhre, insbesondere mit kreisförmigem Querschnitt, ist.

6. Gaslaser nach einem der vorangehenden Ansprüche, **dadurch gekennzeichnet, daß** mehrere Gruppen von Magnetpolpaaren in Richtung der Achse (14) hintereinander angeordnet sind.

7. Gaslaser nach einem der vorangehenden Ansprüche, **gekennzeichnet durch** eine Anordnung von Polen (1, 2), welche ein Magnetfeld mit einer Stärke von bis zu 10 Tesla erzeugen kann.

8. Gaslaser nach einem der vorangehenden Ansprüche, **gekennzeichnet durch** eine Anordnung von Polen (1,2), welche ein Magnetfeld mit einer Stärke zwischen 0,1 und 2 Tesla, vorzugsweise zwischen 0,1 und 1 Tesla erzeugen kann.

9. Gaslaser nach einem der vorangehenden Ansprüche, **dadurch gekennzeichnet, daß** die Magnetpole (1, 2) an Magneten ausgebildet sind, welche außerhalb des Gefäßes (6) angeordnet sind.

10. Gaslaser nach einem der vorangehenden Ansprüche, **dadurch gekennzeichnet, daß** die Pole (1, 2) an Permanentmagneten ausgebildet sind.

11. Gaslaser nach einem der Ansprüche 1 bis 9, **dadurch gekennzeichnet, daß** die Pole (1, 2) von einem oder mehreren Elektromagneten gebildet sind.

12. Gaslaser nach Anspruch 11, **dadurch gekennzeichnet, daß** der bzw. die Elektromagnete von einer Gleichstromquelle (5) erregt werden.

13. Gaslaser nach Anspruch 11, **dadurch gekennzeichnet, daß** der bzw die Elektromagnete von einer Wechselstromquelle (5) erregt werden, insbesondere mit Wechselstrom von 50 Hz oder 60 Hz.

14. Gaslaser nach Anspruch 13, **dadurch gekennzeichnet, daß** die Frequenz der Wechselstromquelle (5), welche den bzw. die Elektromagneten erregt, klein gegen die Frequenz des elektromagnetischen Wechselfeldes ist, welches das Plasma erzeugt.

15. Gaslaser nach einem der vorangehenden Ansprüche, **dadurch gekennzeichnet, daß** das Gas bzw. das Gasgemisch in dem Gefäß (6) einen solchen Druck aufweist, daß die mittlere freie Weglänge für den elastischen Stoß thermischer Elektronen gegen neutrale Atome oder Moleküle des Gases ungefähr gleich dem mittleren $2\pi$- fachen des Gyrationsradius der freien Elektronen im Magnetfeld am Rande des Plasmas ist.

**16.** Gaslaser nach einem der vorangehenden Ansprüche, **dadurch gekennzeichnet, daß** die Quelle des ektromagnetischen Wechselfeldes eine Spule (4) ist, die das Gefäß (6) umgibt und Bestandteil eines elektrischen Schwingkreises ist, welcher von einem Frequenzgenerator (15) gespeist wird.

**17.** Gaslaser nach Anspruch 16, **dadurch gekennzeichnet, daß** die Spule (4) das Gefäß (6) nur auf einem Teil seiner Länge umgibt, welcher von den Enden des Gefäßes (6) Abstand hat.

**18.** Gaslaser nach Anspruch 17, **dadurch gekennzeichnet, daß** die Windungen der Spule (4) den Achsenbereich des von den Polen (1,2) ausgehenden Multipolfeldes umschließen, insbesondere den Achsenbereich (Achse 14) eines von zwei Magnetpolpaaren ausgehenden Vierpolfeldes.

**19.** Gaslaser nach einem der Ansprüche 1 bis 15, **dadurch gekennzeichnet, daß** zwei oder mehr als zwei Elektroden (16, 17) in dem Gefäß (6) die Quelle des elektromagnetischen Wechselfeldes und Bestandteile eines elektrischen Schwingkreises sind, welcher von einem Frequenzgenerator (15) gespeist wird.

**20.** Gaslaser nach Anspruch 19, **dadurch gekennzeichnet, daß** die Elektroden (16, 17) im Achsenbereich des von den Polen (1, 2) ausgehenden Multipolfeldes, insbesondere im Achsenbereich (Achse 14) eines von zwei Magnetpolpaaren (1, 2) ausgehenden Vierpolfeldes, jeweils ein Loch, eine Ausnehmung, eine Perforation oder dergleichen Durchgang zum Durchtritt der Laserstrahlung haben.

**21.** Gaslaser nach Anspruch 19 oder 20, **dadurch gekennzeichnet, daß** der Schwingkreis eine Spule (19) enthält, welche in Reihe mit der durch die Elektroden (16, 17) bestimmten Plasmastrecke (34) geschaltet ist und diese umgibt, wobei ein Kondensator (18) des Schwingkreises parallel zu der aus der Spule (19) und der Plasmastrecke (34) zwischen den Elektroden (16, 17) gebildeten Anordnung liegt.

**22.** Gaslaser nach einem der vorangehenden Ansprüche, **dadurch gekennzeichnet, daß** das elektromagnetische Wechselfeld ein Niederfrequenzfeld ist.

**23.** Gaslaser nach Anspruch 22, **dadurch gekennzeichnet, daß** das elektromagnetische Wechselfeld eine Frequenz von wenigstens 50 Hz hat.

**24.** Gaslaser nach einem der Ansprüche 1 bis 21, **dadurch gekennzeichnet, daß** das elektromagnetische Wechselfeld ein Hochfrequenzfeld ist.

**25.** Gaslaser nach einem der Ansprüche 1 bis 21, **dadurch gekennzeichnet, daß** das elektromagnetische Wechselfeld ein Mikrowellenfeld ist.

**26.** Gaslaser nach einem der Ansprüche 1 bis 21, **dadurch gekennzeichnet, daß** die Quelle des elektromagnetischen Wechselfeldes eine frequenzangepaßte und dadurch resonanzfähige Kavität ist, die den Raumbereich des laseraktiven Plasmas umschließt und Bestandteil eines Hochfrequenzgenerators oder eines Mikrowellengenerators ist.

**27.** Gaslaser nach einem der vorangehenden Ansprüche, **dadurch gekennzeichnet, daß** er ein kontinuierlich betriebener Laser (CW - Laser) ist.

**28.** Gaslaser nach einem der Ansprüche 1 bis 26, **dadurch gekennzeichnet, daß** er ein gepulst betriebener Laser ist.

**29.** Gaslaser nach Anspruch 28, **dadurch gekennzeichnet, daß** Mittel zum permanenten Erzeugen einer Gasentladung in Kombination mit Mitteln (20 - 23) für eine gepulste Energiezufuhr an das Plasma vorgesehen sind, so daß einer permanenten Gasentladung, insbesondere einer HF- oder Mikrowellengasentladung, eine gepulste Energiezufuhr an das Plasma überlagert werden kann.

**30.** Gaslaser nach Anspruch 28 oder 29, **dadurch gekennzeichnet, daß** für den gepulsten Betrieb des Lasers die Länge der Plasmasäule im Gefäß (6) begrenzende Elektroden (24, 25) vorgesehen sind, die sich in einem Schaltkreis befinden, in welchem ein aufladbarer Kondensator (21) über einen schnellen elektronischen Schalter (22) und über die Elektroden (24, 25) entladen werden kann.

**31.** Gaslaser nach Anspruch 28 oder 29, **dadurch gekennzeichnet, daß** für den gepulsten Betrieb des Lasers eine das Plasma weitgehend einschließende Spule (20) vorgesehen ist, die sich in einem Schaltkreis befindet, in welchem ein aufladbarer Kondensator (21) über einen schnellen elektronischen Schalter (22) und über die Spule (20) entladen werden kann.

**32.** Gaslaser nach Anspruch 30 oder 31, **dadurch gekennzeichnet, daß** der Schalter (22) ein Thyratron, ein Thyristor oder ein Pseudofunkenschalter ist.

**33.** Gaslaser nach einem der vorangehenden Ansprüche, **dadurch gekennzeichnet, daß** das Gas bzw. das Gasgemisch im Gefäß (6) mindestens ein Edelgas aus der Helium, Neon, Argon, Xenon und Krypton umfassenden Gruppe enthält.

**34.** Gaslaser nach Anspruch 33, **dadurch gekennzeichnet, daß** die Mittel zum Erzeugen des Plasmas und die Mittel zum Erzeugen eines magnetischen Feldes so ausgebildet sind, daß Laserübergänge in einfach oder mehrfach geladenen Ionen der Edelgasfüllung angeregt und die daraus sich ergebende Laserstrahlung über ein Auskoppelfenster (7) emittiert wird.

**35.** Gaslaser nach einem der Ansprüche 1 bis 32, **dadurch gekennzeichnet, daß** das Gefäß (6) im wesentlichen Kohlendioxid enthält.

**36.** Gaslaser nach Anspruch 35, **dadurch gekennzeichnet, daß** das Gefäß (6) zusätzlich Stickstoff und Helium oder Stickstoff und Neon enthält.

**37.** Gaslaser nach einem der vorangehenden Ansprüche, **dadurch gekennzeichnet, daß** zur Frequenzverdoppelung oder Frequenzvervielfachung der emittierten Laserstrahlung eine Einrichtung vorgesehen ist, welche nach der Methode der nichtlinearen Optik arbeitet und insbesondere einen nichtlinear optischen Kristall enthält.

**38.** Verwendung eines Gaslasers nach Anspruch 37 als Röntgenlaser.

**39.** Verwendung eines Gaslasers nach einem der Ansprüche 1 bis 37 für medizinische Operationen, insbesondere für Augenoperationen und für Hautbehandlungen.

**40.** Verfahren zum Betreiben eines $CO_2$-Lasers nach Anspruch 35 oder 36 mit einem vom Gas durchflossenen Gefäß (6), **dadurch gekennzeichnet, daß** die Energieeinstrahlung durch das elektromagnetische Wechselfeld und der Gasdruck so aufeinander abgestimmt werden, daß die mittlere Elektronentemperatur $T_{el}$ nicht größer als 0,5eV/k, vorzugsweise 0,3eV/k ist, wobei k die Boltzmannkonstente ist.

**41.** Verfahren nach Anspruch 40, **dadurch gekennzeichnet, daß** das Gas gekühlt wird.

**42.** Verfahren nach Anspruch 40 oder 41, **dadurch gekennzeichnet, daß** das Gas im Kreislauf umgewälzt wird.

**43.** Verfahren nach Anspruch 41 und 42, **dadurch gekennzeichnet, daß** das Gas zur Kühlung über einen Wärmetauscher (29) geführt wird.

**44.** Verfahren nach Anspruch 40, 41, 42 oder 43, **dadurch gekennzeichnet, daß** Dissoziationsprodukte des $CO_2$ aus dem Gasfluß entfernt und durch $CO_2$ ersetzt werden und daß zu diesem Zweck im Gefäß (6) eine quer zur Achse (14) verlaufende Gasströmung erzeugt wird.

**Claims**

**1.** Gas laser comprising a container (6) receiving a gas or a gas mixture as laser-active medium, the container (6) having an axis (14) along which the gas laser emits its laser radiation, and comprising further means for generating a plasma in the container (6) and means for generating a magnetic field in the container (6), **characterised in that** a group of at least two pairs of magnet poles is provided, with the poles (1, 2) extending at a distance from, and along the axis (14) and being arranged around the axis (14) with alternating polarity so that the magnetic field emanating from them is a quadrupole field, which exhibits an intensity sink in the region of the axis (14), and that the means for generating the plasma include a source for an electromagnetic alternating field, which is associated to the container (6).

2. The gas laser as defined in Claim 1, **characterised in that** the magnetic field disappears in the region of the axis (14).

3. The gas laser as defined in Claim 1 or Claim 2, **characterised in that** the axis (14) is an axis of symmetry of the magnet pole arrangement.

4. The gas laser as defined in any of the preceding claims, **characterised in that** the axis (14) is an axis of symmetry of the container (6).

5. The gas laser as defined in any of the preceding claims, **characterised in that** the container (6) is a tube, especially one with circular cross-section.

6. The gas laser as defined in any of the preceding claims, **characterised in that** a plurality of groups of magnet pole pairs are arranged one behind the other in the direction of the axis (14).

7. The gas laser as defined in any of the preceding claims, **characterised by** an arrangement of poles (1, 2) which is capable of generating a magnetic field with a strength of up to 10 Tesla.

8. The gas laser as defined in any of the preceding claims, **characterised by** an arrangement of poles (1, 2) which is capable of generating a magnetic field with a strength of between 0.1 and 2 Tesla, preferably between 0.1 and 1 Tesla.

9. The gas laser as defined in any of the preceding claims, **characterised in that** the magnet poles (1, 2) are formed on magnets arranged outside the container (6).

10. The gas laser as defined in any of the preceding claims, **characterised in that** the poles (1, 2) are formed on permanent magnets.

11. The gas laser as defined in any of Claims 1 to 9, **characterised in that** the poles (1,2) are formed by one or more electromagnets.

12. The gas laser as defined in Claim 11, **characterised in that** the one or more electromagnets are excited by a direct-current source (5).

13. The gas laser as defined in Claim 11, **characterised in that** the one or more electromagnets are excited by an alternating-current source (5), especially with alternating current of 50 Hz or 60 Hz.

14. The gas laser as defined in Claim 13, **characterised in that** the frequency of the alternating-current source (5), that excites the one or more electromagnets, is low compared with the frequency of the electromagnetic alternating field that generates the plasma.

15. The gas laser as defined in any of the preceding claims, **characterised in that** the pressure of the gas or the gas mixture in the container (6) is such that the mean free path length for the elastic collision of thermal electrons with neutral atoms or molecules of the gas is approximately equal to the mean value of $2\pi$ times the gyration radius of the free electrons in the magnetic field at the periphery of the plasma.

16. The gas laser as defined in any of the preceding claims, **characterised in that** the source of the electromagnetic alternating field is a coil (4) which surrounds the container (6) and which is part of an electric oscillating circuit which is fed by a frequency generator (15).

17. The gas laser as defined in Claim 16, **characterised in that** the coil (4) surrounds the container (6) only over a portion of its length spaced from the ends of the container (6).

18. The gas laser as defined in Claim 17, **characterised in that** the windings of the coil (4) enclose the area of the axis of the multipole field emanating from the poles (1, 2), especially the area of the axis (axis 14) of a four-pole field emanating from two magnet pole pairs.

19. The gas laser as defined in Claims 1 to 15, **characterised in that** two or more than two electrodes (16, 17) in the container (6) are the source of the electromagnetic alternating field and part of an electric oscillating circuit which is fed by a frequency generator (15).

20. The gas laser as defined in Claim 19, **characterised in that** each of the electrodes (16, 17) has a hole, a recess, a perforation or a like passage for the laser radiation in the region of the axis of the multipole field emanating from the poles (1, 2), especially in the region of the axis (14) of a four-pole field emanating from two magnet pole pairs (1, 2).

21. The gas laser as defined in Claim 19 or 20, **characterised in that** the oscillating circuit comprises a coil (19), which is connected in series with, and surrounds, the plasma distance (34) determined by the electrodes (16, 17), a capacitor (18) of the oscillating circuit being connected in parallel to the arrangement formed by the coil (19) and the plasma distance (34) between the electrodes (16, 17).

22. The gas laser as defined in any of the preceding claims, **characterised in that** the electromagnetic alternating field is a low-frequency field.

23. The gas laser as defined in Claim 22, **characterised in that** the electromagnetic alternating field has a frequency of at least 50 Hz.

24. The gas laser as defined in any of Claims 1 to 21, **characterised in that** the electromagnetic field is a high-frequency field.

25. The gas laser as defined in any of Claims 1 to 21, **characterised in that** the electromagnetic field is a microwave field.

26. The gas laser as defined in any of Claims 1 to 21, **characterised in that** the source of the electromagnetic alternating field is a frequency-adjusted and, thus, resonant cavity that encloses the spatial region of the laser-active plasma and is part of a high-frequency generator or a microwave generator.

27. The gas laser as defined in any of the preceding claims, **characterised in that** it is a continuously operated laser (CW laser).

28. The gas laser as defined in any of Claims 1 to 26, **characterised in that** it is a laser operated in a pulsed mode.

29. The gas laser as defined in Claim 28, **characterised in that** means are provided for permanently generating a gas discharge, in combination with means (20 - 23) for pulsed energy supply to the plasma, so that a pulsed energy supply to the plasma can be superimposed upon a permanent gas discharge, especially a HF or microwave gas discharge.

30. The gas laser as defined in Claim 28 or Claim 29, **characterised in that** for the pulsed operation of the laser electrodes (24, 25) limiting the length of the plasma column in the container (6) are provided, which electrodes are part of a circuit in which a re-chargeable capacitor (21) can be discharged via a quick-acting electronic switch (22) and via the electrodes (24, 25).

31. The gas laser as defined in Claim 28 or Claim 29, **characterised in that** for its pulsed operation a coil (20) is provided that largely encloses the plasma, the coil being part of a circuit in which a re-chargeable capacitor (21) can be discharged via a quick-acting electronic switch (22) and via the coil (20).

32. The gas laser as defined in Claim 30 or Claim 31, **characterised in that** the switch is a thyratron, a thermistor or a pseudo spark switch.

33. The gas laser as defined in any of the preceding claims, **characterised in that** the gas or the gas mixture in the container (6) contains at least one rare gas from the group including helium, neon, argon, xenon and krypton.

34. The gas laser as defined in Claim 33, **characterised in that** the means for generating the plasma and the means for generating a magnetic field are designed in such a way that laser transitions are excited in single-charged or multiple-charged ions of the rare-gas filling and that the laser radiation resulting therefrom is emitted through an extraction window (7).

# EP 1 218 975 B1

35. The gas laser as defined in any of Claims 1 to 32, **characterised in that** the container (6) contains substantially carbon dioxide.

36. The gas laser as defined in Claim 35, **characterised in that** the container (6) contains additionally nitrogen and helium or nitrogen and neon.

37. The gas laser as defined in any of the preceding claims, **characterised in that** for doubling or multiplying the emitted radiation means are provided that work according to the method of non-linear optics and that contain, especially, an optic crystal.

38. Use of a gas laser according to Claim 38 as a roentgen laser

39. Use of a gas laser according to any of Claims 1 to 37 for medical operations, especially for operations on eyes and for skin treatments.

40. Method of operating a $CO_2$ laser according to Claim 35 or Claim 36 having a container (6) passed by a gas, **characterised in that** the irradiation of energy through the electromagnetic alternating field and the gas pressure are adjusted one to the other in such a way that the mean electron temperature $T_{el}$ is not higher than 0.5eV/k, preferably 0.3eV/k, wherein k is Boltzmann's constant.

41. The method as defined in Claim 40, **characterised in that** the gas is cooled.

42. The method as defined in Claim 40 or Claim 41, **characterised in that** the gas is re-circulated in a circuit.

43. The method as defined in Claims 41 and 42, **characterised in that** the gas is guided over a heat-exchanger (29) for cooling.

44. The method as defined in Claims 40, 41, 42 or 43, **characterised in that** dissociation products of the $CO_2$ are removed from the gas flow and replaced by $CO_2$, and that a gas flow transverse to the axis (14) is produced in the container (6) for that purpose.

**Revendications**

1. Laser à gaz comprenant un récipient (6) pour la réception d'un gaz d'un mélange gazeux à titre de milieu actif de laser, dans lequel le récipient (6) possède un axe (14) dans la direction duquel le laser à gaz émet ses rayons laser, des moyens pour générer un plasma dans le récipient (6) et des moyens pour générer un champ magnétique dans le récipient (6), **caractérisé en ce qu'**on prévoit un groupe constitué par deux paires de pôles magnétiques dont les pôles (1, 2) s'étendent à distance de l'axe (14) le long de l'axe (14) et sont disposés autour de l'axe (14) avec une polarité alternante de telle sorte que l'on obtient un champ quadripolaire qui possède une source négative dans la zone de l'axe (14), et **en ce que** les moyens pour générer le plasma renferment une source pour un champ alternatif électromagnétique qui est attribué au récipient (6).

2. Laser à gaz selon la revendication 1, **caractérisé en ce que** le champ magnétique disparaît dans la zone de l'axe (14).

3. Laser à gaz selon la revendication 1 ou 2, **caractérisé en ce que** l'axe (14) est un axe de symétrie de l'agencement constitué par les paires de pôles magnétiques.

4. Laser à gaz selon l'une quelconque des revendications précédentes, **caractérisé en ce que** l'axe (14) est un axe de symétrie du récipient (6).

5. Laser à gaz selon l'une quelconque des revendications précédentes, **caractérisé en ce que** le récipient (6) est un tube, possédant en particulier une section transversale circulaire.

6. Laser à gaz selon l'une quelconque des revendications précédentes, **caractérisé en ce que** plusieurs groupes de paires de pôles magnétiques sont disposés les uns derrière les autres dans la direction de l'axe (14).

7. Laser à gaz selon l'une quelconque des revendications précédentes, **caractérisé par** un agencement de pôles (1, 2) qui permet de générer un champ magnétique possédant une intensité s'élevant jusqu'à 10 teslas.

8. Laser à gaz selon l'une quelconque des revendications précédentes, **caractérisé par** un agencement de pôles (1, 2) qui permet de générer un champ magnétique possédant une intensité entre 0,1 et 2 teslas, de préférence entre 0,1 et 1 tesla.

9. Laser à gaz selon l'une quelconque des revendications précédentes, **caractérisé en ce que** les pôles magnétiques (1, 2) sont réalisés sur des aimants qui sont disposés à l'extérieur du récipient (6).

10. Laser à gaz selon l'une quelconque des revendications précédentes, **caractérisé en ce que** les pôles (1, 2) sont réalisés sur des aimants permanents.

11. Laser à gaz selon l'une quelconque des revendications 1 à 9, **caractérisé en ce que** les pôles (1, 2) sont formés par un ou plusieurs électroaimants.

12. Laser à gaz selon la revendication 11, **caractérisé en ce que** l'électroaimant, respectivement les électroaimants sont excités par une source de courant continu (5).

13. Laser à gaz selon la revendication 11, **caractérisé en ce que** l'électroaimant, respectivement les électroaimants sont excités par une source de courant alternatif (5), en particulier avec un courant alternatif de 50 Hz ou de 60 Hz.

14. Laser à gaz selon la revendication 13, **caractérisé en ce que** la fréquence de la source de courant alternatif (5) qui excite l'électroaimant, respectivement les électroaimants, est petite par rapport à la fréquence du champ alternatif électromagnétique qui génère le plasma.

15. Laser à gaz selon l'une quelconque des revendications précédentes, **caractérisé en ce que** le gaz, respectivement le mélange de gaz dans le récipient (6) présente une pression telle que la longueur de parcours libre moyen pour la collision élastique d'électrons thermiques par rapport à celle de d'atomes ou de molécules neutres du gaz est approximativement égale à la moyenne de $2\pi$ fois le rayon de giration des électrons libres dans le champ magnétique au bord du plasma.

16. Laser à gaz selon l'une quelconque des revendications précédentes, **caractérisé en ce que** la source du champ alternatif électromagnétique est une bobine (4) qui entoure le récipient (6) et qui fait partie d'un circuit oscillant électrique qui est alimenté par un générateur de fréquence (15).

17. Laser à gaz selon la revendication 16, **caractérisé en ce que** la bobine (4) n'entoure le récipient (6) que sur une partie de la longueur de ce dernier, qui est disposée à distance des extrémités du récipient (6).

18. Laser à gaz selon la revendication 17, **caractérisé en ce que** les enroulements de la bobine (4) entourent la zone axiale du champ multipolaire partant des pôles (1, 2), en particulier la zone axiale (axe 14) d'un champ quadripolaire partant de deux paires de pôles magnétiques.

19. Laser à gaz selon l'une quelconque des revendications 1 à 15, **caractérisé en ce que** deux ou plus de deux électrodes (16,17) représentent, dans le récipient (6), la source du champ alternatif électromagnétique et font partie d'un circuit oscillant électrique qui est alimenté par un générateur de fréquence (15).

20. Laser à gaz selon la revendication 19, **caractérisé en ce que** les électrodes (16, 17) dans la zone axiale du champ multipolaire partant des pôles (1, 2), en particulier dans la zone axiale (axe 14) d'un champ quadripolaire partant de deux paires de pôles magnétiques (1, 2), possèdent chacune un trou, un évidement, une perforation ou un passage analogue pour la pénétration du rayonnement laser.

21. Laser à gaz selon la revendication 19 ou 20, **caractérisé en ce que** le circuit oscillant contient une bobine (19) qui est montée en série avec le trajet du plasma (34) déterminé par les électrodes (16, 17) et qui entoure ce dernier, dans lequel un condensateur (18) du circuit oscillant est monté en parallèle à l'agencement formé par la bobine (19) et par le trajet du plasma (34) entre les électrodes (16, 17).

22. Laser à gaz selon l'une quelconque des revendications précédentes, **caractérisé en ce que** le champ alternatif électromagnétique est un champ basse fréquence.

**23.** Laser à gaz selon la revendication 22, **caractérisé en ce que** le champ alternatif électromagnétique possède une fréquence d'au moins 50 Hz.

**24.** Laser à gaz selon l'une quelconque des revendications 1 à 21, **caractérisé en ce que** le champ alternatif électromagnétique est un champ haute fréquence.

**25.** Laser à gaz selon l'une quelconque des revendications 1 à 21, **caractérisé en ce que** le champ alternatif électromagnétique est un champ à hyperfréquence.

**26.** Laser à gaz selon l'une quelconque des revendications 1 à 21, **caractérisé en ce que** la source du champ alternatif électromagnétique est une cavité adaptée à la fréquence et par conséquent résonatrice, qui renferme la zone spatiale du plasma actif du laser et qui fait partie d'un générateur aux fréquences ou d'un générateur à hyperfréquence.

**27.** Laser à gaz selon l'une quelconque des revendications précédentes, **caractérisé en ce qu'**il s'agit d'un laser entraîné en continu (laser CW).

**28.** Laser à gaz selon l'une quelconque des revendications 1 à 26, **caractérisé en ce qu'**il s'agit d'un laser pulsé.

**29.** Laser à gaz selon la revendication 28, **caractérisé en ce qu'**on prévoit des moyens pour la génération permanente d'une décharge gazeuse en combinaison avec des moyens (20 - 23) pour une alimentation pulsée en énergie, de telle sorte que l'on peut superposer à une décharge gazeuse permanente, en particulier une décharge gazeuse haute fréquence ou à hyperfréquence, une alimentation pulsée en énergie sur le plasma.

**30.** Laser à gaz selon la revendication 28 ou 29, **caractérisé en ce qu'**on prévoit, pour l'entraînement pulsé du laser, des électrodes (24, 25) délimitant la longueur de la colonne de plasma dans le récipient (6), électrodes qui sont disposées dans le circuit de commutation, dans lequel un condensateur (21) apte à être chargé peut être déchargé via un commutateur électronique rapide (22) et via les électrodes (24, 25).

**31.** Laser à gaz selon la revendication 28 ou 29, **caractérisé en ce qu'**on prévoit, pour l'entraînement pulsé du laser, une bobine (20) renfermant le plasma dans une large mesure, qui se trouve dans le circuit de commutation, dans lequel un condensateur (21) apte à être chargé peut être déchargé via un commutateur électronique rapide (22) et via la bobine (20).

**32.** Laser à gaz selon la revendication trente ou 31, **caractérisé en ce que** le commutateur (22) un thyratron, un thyristor ou un commutateur à pseudoétincelles.

**33.** Laser à gaz selon l'une quelconque des revendications précédentes, **caractérisé en ce que** le gaz, respectivement le mélange gazeux dans le récipient (6) contient au moins un gaz noble choisi parmi le groupe comprenant l'hélium, le néon, l'argon, le xénon et le krypton.

**34.** Laser à gaz selon la revendication 33, **caractérisé en ce que** les moyens pour générer le plasma et les moyens pour générer un champ magnétique sont réalisés de telle sorte que des transitions lasers sont excitées dans des ions une fois chargés ou plusieurs fois chargés de la charge de gaz nobles, le rayon laser que l'on obtient en l'occurrence étant émis via une fenêtre de captation (7).

**35.** Laser à gaz selon l'une quelconque des revendications 1 à 32, **caractérisé en ce que** le récipient (6) contient essentiellement du dioxyde de carbone.

**36.** Laser à gaz selon la revendication 35, **caractérisé en ce que** le récipient (6) contient en outre de l'azote et de l'hélium ou de l'azote et du néon.

**37.** Laser à gaz selon l'une quelconque des revendications précédentes, **caractérisé en ce qu'**on prévoit un mécanisme pour doubler la fréquence ou pour multiplier la fréquence du rayon laser émis, mécanisme qui travaille conformément au procédé de l'optique non linéaire et qui contient en particulier un cristal optique non linéaire.

**38.** Utilisation d'un laser à gaz selon la revendication 37, à titre de laser à rayons X.

**39.** Utilisation d'un laser à gaz selon l'une quelconque des revendications 1 à 37 pour des opérations chirurgicales, en particulier pour des opérations oculaires et pour des traitements de la peau.

**40.** Procédé pour l'entraînement d'un laser au dioxyde de carbone selon la revendication 35 ou 36, avec un récipient (6) traversé par un gaz, **caractérisé en ce que** le rayonnement énergétique est déterminé par le champ alternatif électromagnétique et par la pression de gaz de manière réciproque de telle sorte que la température électronique moyenne $T_{el}$ n'est pas supérieure à 0,5 eV/k, de préférence s'élève à 0,3 eV/k, k représentant la constante de Boltzmann.

**41.** Procédé selon la revendication 40, **caractérisé en ce que** le gaz est refroidi.

**42.** Procédé selon la revendication 40 ou 41, **caractérisé en ce que** le gaz est mis en circulation.

**43.** Procédé selon les revendications 41 et 42, **caractérisé en ce que** le gaz est guidé via un échangeur de chaleur (29), à des fins de refroidissement.

**44.** Procédé selon la revendication 40, 41, 42 ou 43, **caractérisé en ce que** les produits de dissociation du dioxyde de carbone sont éliminés du flux de gaz et sont remplacés par du dioxyde de carbone et **en ce qu'**on génère à cet effet dans le récipient (6) un courant de gaz s'étendant en direction transversale par rapport à l'axe (14).

EP 1 218 975 B1

zum
HF- Generator

6

10

9

1
N

7

2 S

S 2

4

N 1

B

10

7

**Fig. 1**

Fig.2 Scan-Bild des laseraktiven Plasmas
Diagonaldurchmesser 2,8mm
Polschuhabstand 3cm
Neon, 40MHz, 40W

$$y_0^* \sqrt{2}$$
$$y_0^*$$
$$-y_0^*$$
$$-y_0^* \sqrt{2}$$

$y_0 > y_0^*$  $\quad$  $y_0 = y_0^*$  $\quad$  $y_0 < y_0^*$  $\quad$  $y_0 < y_0^*$  $\quad$  $y_0 < y_0^*$  $\quad$  $y_0 = 0$  $\quad$  $y_0$ existiert nicht

**Fig.3**

**Elektronenbahnen nach Anhang A1**

EP 1 218 975 B1

Fig. 4a

zum HF
Generator 15

Fig. 4b

**11**

**4**

HF Generator
**15**

C
**18**

Fig. 5a

**19**

**16**

**11**

**17**

**16**

HF Generator
**15**

C
**18**

**17**

Fig. 5b

**22**

**11**

Ladegerät
**23**

$C_L$
**21**

**20**

Fig. 5c

27

24

L_Pl 34

6

C_L
21

Ladegerät
23

25

Fig. 5d

16

19

34

HF Generator
15

C
18

17

Fig. 5e

Fig.6

EP 1 218 975 B1